# EUROPEAN PATENT SPECIFICATION

(11) **EP 0 827 858 B1**
(45) Date of publication and mention of the grant of the patent: **26.11.2003**
(21) Application number: 96306460.5
(22) Date of filing: 05.09.1996
(51) Int. Cl.: B60K 6/04, B60K 41/00

(54) **The combined power system using a rotation speed and torque difference detector device for proportional control**
Kombiniertes Leistungssystem mit Drehgeschwindigkeits- und Drehmomentdifferenzsensor für proportionale Steuerung
Système de puissance combiné utilisant un détecteur de différence de couple et de vitesse de rotation pour un contrôle proportionnel

(43) Date of publication of application: 11.03.1998
(73) Proprietor: Yang, Tai Her, Si-Hu Town, Dzan Hwa (TW)
(72) Inventor: Yang, Tai Her, Si-Hu Town, Dzan Hwa (TW)
(74) Representative: Pratt, David Martin

(56) References cited:
- EP-A- 0 725 474
- FR-A- 892 665
- GB-A- 2 255 183
- US-A- 4 335 429

## Description

The invention relates to a combined driving apparatus including a primary power source having a rotating shaft for driving an output shaft via a device, and an auxiliary power source, for driving or for braking the output shaft. All references in this specification to the 'active power source' refer to the primary power source.

US 4335429 discloses a combined driving apparatus according to the preamble of claim 1, built into a hybrid vehicle having an internal combustion engine, a relatively large motor/generator and a relatively small motor/generator which are controlled by a microcomputer based on the required torque of the vehicle as a function of time. In order to minimise fuel consumption, the engine is permitted to run only in its most efficient range of operation. The two motors can be driven together or one of the motors can be operated as a brake for the other one.

It is an aim of the present invention to improve the above combined driving apparatus. The invention is defined by claim 1 and other inventive and advantageous features are defined in the sub-claims.

Various embodiments of the present invention will now be described by way of example only and with reference to the drawings in which:
Figure 1 is the system block schematic diagram of the invention.
Figure 2 is the first embodying example schematic diagram of the co-generative type rotation speed and rotation torque detector device of the invention.
Figure 3 is the second embodying example schematic diagram of the co-generative type rotation speed and rotation torque detector device of the invention.
Figure 4 is the operation characteristic diagram of figure 2 and figure 3.
Figure 5 is a block schematic diagram of the invention illustrating a proportional auxiliary speed driving constituted by a double-acting rotational electrical machine structure.
Figure 6 is a block schematic diagram of the invention illustrating a proportional auxiliary torque driving constituted by an electrical machine structure.
Figure 7 is the first schematic diagram of the invention illustrating the embodiment of the electrical machine and the planetary (or differential) wheel system.
Figure 8 is the second schematic diagram of the invention illustrating the embodiment of the electrical machine and the planetary (or differential) wheel system.
   The embodiments shown in Figures 9-13 do not form part of the invention.
Figure 9 is a system block schematic diagram of the controllable combined power system exclusively using the rotation speed of the active power source for proportional control reference.
Figure 10 is a system block schematic diagram of the controllable combined power system constituted by a double-acting rotational electrical machine structure exclusively using the rotation speed of the active power source for proportional control reference.
Figure 11 is a system block schematic diagram of the controllable combined power system constituted by an active power source on a common shaft type electrical machine structure exclusively using the rotation speed of the active power source for proportional control reference.
Figure 12 is the first system block schematic diagram of a controllable combined power system constituted by an electrical machine structure and planetary (or differential) wheel train exclusively using the rotation speed of the active power source for proportional control reference.
Figure 13 is the second system block schematic diagram of a controllable combined power system constituted by an electrical machine structure and planetary (or differential) wheel train exclusively using the rotation speed of the active power source for proportional control reference.

### DETAILED DESCRIPTION OF THE INVENTION

The innovative design of the combined power system using a co-generative type rotation speed and rotation torque detector device for proportional control discloses a combined power system including a primary power source having a rotating shaft (105) for driving an output shaft (100) via a device (111), and an auxiliary power source, for driving or braking.

By using the rotation speed signal of the primary power source output shaft (100) and the torque difference between the rotating shaft (105) and the output shaft (100) detected by the device (111) as the control reference basis, the auxiliary power source (102) is controlled to provide proportional auxiliary speed driving, or proportional auxiliary torque driving, or reverse damping from the regeneration braking. The interaction between the primary power source, auxiliary power source and the output shaft includes all or part of the following functions:
1) By referring to the rotation speed signal of the primary power source and the torque difference detected by the co-generative type rotation speed and torque detector device as the basis, the auxiliary power source provides correspondingly proportional auxiliary driving to commonly drive the load together with the primary power source;
2) the primary power source drives the load independently;
3) The auxiliary power source drives the load independently;
4) By referring to the rotation speed signal of the active power source and the torque difference with the output shaft detected by the co-generative type rotation speed and torque detector device as the basis, the auxiliary power source provides power regeneration effect or the counter driving to generate a correspondingly reverse braking power to limit the output shaft and the load;
5) By referring to the rotation speed signal of the active power source and the torque difference with the output shaft detected by the co-generative type rotation speed and torque detector device as the basis, the auxiliary power source provides power regeneration effect or the counter driving to generate a reverse damping through the correspondingly reverse kinetic energy;
6) The output shaft is lock fixed to possess the function of item 5 independently.

The design is by using the rotation speed signal of the active power source and the torque difference with the output shaft detected by the co-generative type rotation speed and torque detector device as the reference to control the auxiliary power source to provide additive auxiliary driving in the same direction according to the preset corresponding auxiliary driving ratio, whereof the auxiliary driving includes: 1)To provide unidirectional or double-directional auxiliary driving, whereof the auxiliary driving ratio between the active power source and the auxiliary power source can be by using the rotation speed of the active power source and the torque difference with the output shaft detected by the co-generative type rotation speed and rotation torque detector device to do preset ratio auxiliary driving or to do random control by manual operating device; 2)To provide reverse damping function status of the output inertia, wherein the auxiliary power source is controlled by a manual operating device or by the rotation speed of the active power source and the torque difference with the output shaft detected by the co-generative type rotation speed and rotation torque detector device, whereby it is through the power regeneration effect or counter driving to provide the reverse torque as the damping, or 3) To be as the load damping of the active power source, wherein the auxiliary power source is randomly controlled by a manually operated device or is controlled by using the rotation speed of the active power source and the torque difference between the active power source and the load acting auxiliary power source detected by the co-generative type rotation speed and rotation torque detector device as the control basis, and is further through the power regeneration effect or counter driving to generate load damping; thereof the above functions are the progressive and innovative features of the combined power system using a co-generative type rotation speed and rotation torque detector device for proportional control and in addition, the rotation speed can be used exclusively for the operating control reference basis according to the system requirement to constitute the combined power operation;

The principle and its various application examples and functions of the combined power system using a co-generative type rotation speed and rotation torque detector device for proportional control is delineated as follows:

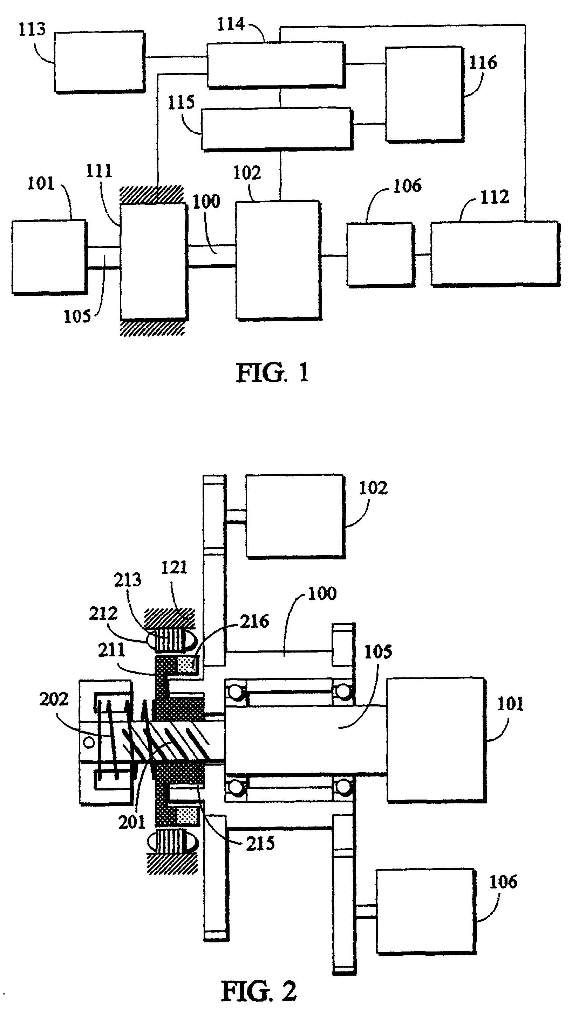

Figure 1 is the system block schematic diagram of the combined power system using a co-generative type rotation speed and rotation torque detector device for proportional control, wherein its basic embodiment includes the following:
   - An active power source 101: It is a power device driven manually or by electric power or other mechanical power and is capable of performing rotational movements, whereof its power output shaft 105 is directly coupled or power coupled with the auxiliary power source 102 or load 106 through unidirectional devices with the auxiliary power source or the load;
   - An co-generative type rotation speed and rotation torque detector device 111: It is an analog or digital rotation speed and rotation torque detector device which can be used to detect the rotation speed and direction of rotating shaft 105 of the active power source 101 and the torque difference with the output shaft 100 for the control basis, whereof the detecting signal is generated by the electromagnetic effect or photoelectric effect or other physical effects, whereof the co-generation method is comprised of having one single detected structure to produce synthesized signal of the rotation speed and the rotation torque difference or synthesizing the separated signals from the two individual detected structure;
   - An auxiliary speed detector device 112: It is an analog or digital type rotation speed detector device which is installed to detect the rotation speed of the auxiliary power source or the output shaft and input such signal to the central controller 114 to provide speed limiting or other output speed control signal feedback, whereof it can be omitted for an open type system;
   - The mechanical structure which generate the relative activated translation due to the torque difference between the rotating shaft 105 of the above said active power source 101 and the output shaft 100 while maintaining the transmission status between them, whereof it is comprised of the commonly utilized axial or radial bi-directional translation mechanisms, including the bi-directional-actuating screw structure or the bi-directional-actuating internal screw type or external screw type stud-less screw structure, or bi-directional-actuating axial bevel surface or bevel gear coupling mechanism, or the detector structure which can convert the bi-directional translation or rotational angular translation into electric power, whereof it is comprised of the AC or DC, brush or brush-less, or induced type structure constituted by the analog or digital photoelectric effect, or electromagnetic effect or other physical effects, whereby a relative power signal in linear or non-linear, positive or reverse proportion is generated through the relative rotational movement, and the power signal ratio is changed due to the axially relative coupling position in linear or non-linear positive or reverse proportional variation;
   - An output shaft 100: It is installed between the output side and the rotation speed and rotation torque detector device 111 for transmitting the rotational kinetic energy;
   - A manual operating device 113: It is a input control device comprised of electromechanical or solid state electronic components as well as the relevant control mechanism interfaces, wherein it can be manually operated to produce digital or analog electric power signal or to receive inputs from other electric power signal interfaces for transmitting to the central controller 114, and for further controlling the operating power of the auxiliary power source in order to provide proportional auxiliary driving or proportional reverse damping;
   - A central controller 114: It is an analog or digital electric circuit device comprised of electromechanical or solid state electronic components, or microprocessors, wherein it refers to the cogenerating type rotation speed and rotation torque detector device 111 driven by the active power source 101 and the random commands from the manual operating device 113 to control the electrical driving device 115 and further to drive the auxiliary power source 102 for motor function operation or power regeneration function operation; therein the operation between the active power source 101, auxiliary power source 102 and the output shaft 100 can be either linear or non-linear proportional auxiliary driving or proportional damping functions as required, and the system can be a closed ring type, open ring type, or semi-closed ring type constructions;
   - An electrical machine driving device 115: It is comprised of electromechanical or solid state electronic device, wherein it is operated by the control of the central controller 114 or by the manual operating device 113 to control the input/output power and the rotational directions of the auxiliary power source 102;
   - An Auxiliary power source 102: It is a rotational electrical machine which has motor functions or further has the generator functions, whereof its embodying types are comprised of a double-acting rotational electrical machine 102A or of a static and rotor combination electrical machines 102C,102C or 102D, wherein the coupling methods of the different embodying types with the active power source 101 has different operating functions;
   - A power supply 116: It provides the needed supply power to the auxiliary power source, central controller, electrical machine driving device, the input operating device and the peripheral control devices or to further reserve the regeneration power from the auxiliary power source;
   - A load 106: It is constituted by the rotational or linear translational mechanism accepting the rotational power input.
Figure 2 is the first embodying schematic diagram of the cogenerating type rotational speed and rotational torque detector device of the invention, which is mainly comprised of the following:
   - An active power source rotation shaft 105: It is driven by the rotational kinetic energy of the active power source 101, wherein a screw interactive structure 201 is provided between the active power source rotation shaft 105 and the shaft hole of the axially translatable rotor 211 of the cogenerating type rotational speed and rotational torque detector device, whereof the screw interactive structure 201 is comprised of a tooth thread or toothless roller thread screw, wherein the screw angle can be bi-directional interactive, i.e. the active power source rotation shaft 105 can be rotated to cause the axially translatable rotor 211 translated axially, or the axially translatable rotor 211 under pressure can reverse drive the active power source rotation shaft 105 to rotate, or the axially translatable rotor 211 can be rotated by itself; a jackshaft assembly for axial translational or rotational transmission or other lock key mechanism 215 for axial sliding and rotational transmission is provided between the axially translatable rotor 211 and the output shaft 100 for driving the output side, thereby to allow for the relative axial translation during the rotational transmission between them while maintaining the transmission status;
   - A pre-compressed spring 202 is installed between the active power source rotation shaft 105 itself and the active power source 101, whereby the axially translatable rotor 211 is pre-compressed, whereby the relative axial translation is produced according to the direction and intensity of the transmission torque during the rotational power transmission between the active power source rotation shaft 105 and the axially translatable rotor 211, thereof the axial translatable rotor 211 is correspondingly coupled with the static structure installed on the casing 121, whereby the detector electric power signal is produced during the rotation interaction, whereof the intensity of the electric power detecting signal is determined by the relative rotation speed and the axial coupling positions between the axially translatable rotor 211 and the static structure, thereof the rotation speed is determined by the absolute rotation speed between the active power source 101 and the casing 121, and the axial relative positions is determined by the torque difference between the active power source 101 and the output shaft 100, whereby the axial rotational translation produced by the axially translatable rotor 211 and the pre-compressed spring 202 further changes the axial coupling status between the axially translatable rotor 211 and the static structure;
   - The cogenerating type rotation speed and rotation torque detector device 111 constituted by the above said axially translatable rotor 211 and the static structure, wherein the static structure can be comprised of the magnetic conducting iron core 213 and the electric power detector winding 212, and the axially translatable rotor 211 can be comprised of a structure having a magnetic pole 216 and a shaft hole with interacting screw, whereof the structure between the static structure and the axially translatable rotor can be constituted by a cylindrical or bevel cone structure;
   - For the cogenerating type rotation speed and rotation torque detector device 111 constituted by the above said axially translatable rotor 211 and the static structure, wherein when the rotation torque is zero, its output signal can be either zero, or can be set as larger than or smaller than zero;
   - For the cogenerating type rotation speed and rotation torque detector device 111 constituted by the above said axially translatable rotor 211 and the static structure, when the rotation speed is zero, its output signal can be either zero, or can be otherwise set to be larger than or smaller than zero;
   - The detected signal by the cogenerating type rotation speed and rotation torque detector device 111 can be an analog or a digital signal, wherein the analog signal can be through the analog operational amplifier circuit for signal comparison or signal synthesis, whereby it can be treated by the central controller 114 to further control the electrical machine driving device 115 to provide relative power driving from the auxiliary power source 102 and to limit its largest power, wherein for the case of digital signal, the signal is treated by the central controller 114 to further control the electrical machine driving device 115 to provide relative control on the auxiliary power source 102 and to limit its largest power;
   - The mechanical structure which generate the relative activated translation due to the torque difference between the rotating shaft 105 of the above said active power source 101 and the output shaft 101 while maintaining the transmission status between them, whereof it is comprised of the commonly utilized axial or radial bi-directional translation mechanisms, including the bi-directional-actuating screw structure or the bi-directional-actuating internal screw type or external screw type stud-less screw structure, or bi-directional actuating axial bevel surface or bevel gear coupling mechanism, or the detector structure which can convert the bi-directional translation or rotational angular translation into electric power, whereof it is comprised of the AC or DC, brush or brush-less, or induced type structure constituted by the analog or digital photoelectric effect, or electromagnetic effect or other physical effects, whereby a relative power signal in linear or non-linear, positive or reverse proportion is generated through the relative rotational movement, and the power signal ratio is changed due to the axially relative coupling position in linear or non-linear positive or reverse proportional variation;
   - An output shaft 100: It is driven by the rotational kinetic energy of the active power source 101 through the axially translatable rotor 211, and is driven by the rotational kinetic energy of the auxiliary power source 102, wherein the rotating methods with the auxiliary power source 102 include the indirect driving mechanism through transmission components to couple with the auxiliary power source 102, or the direct coupling between the output shaft 100 and the rotor of the auxiliary power source 102, whereof the methods of its coupling with the load include the direct coupling with the load, or through the transmission devices such as gear, chain wheel and linkages to drive the load.

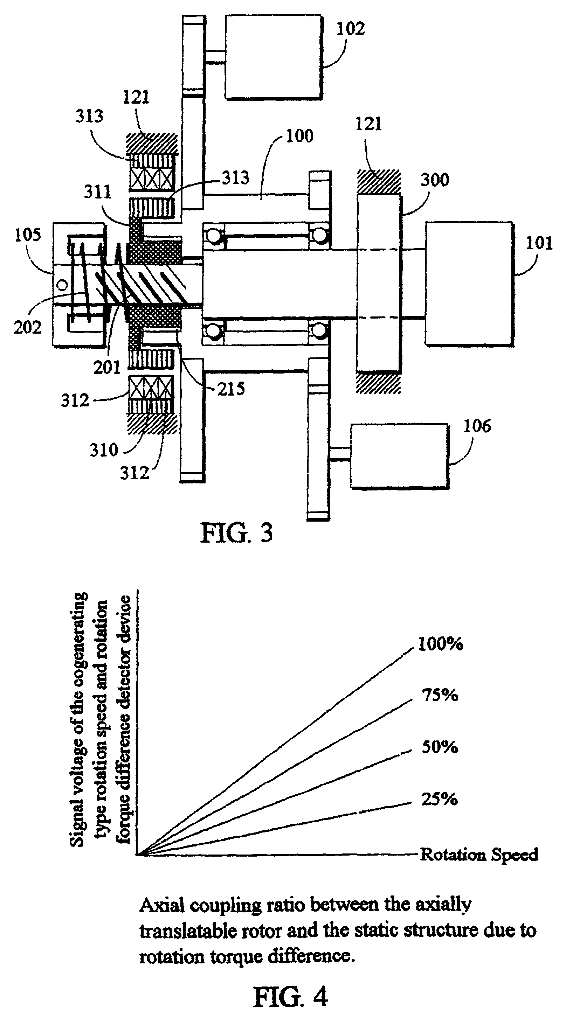

Figure 3 is the second embodying schematic diagram of the cogenerating type rotational speed and rotational torque detector device of the invention, wherein the main structure of the embodying example of figure 3 is characterized to be comprised of an axially translatable rotor 311 and the static structure for detecting the torque difference between the active power source rotation shaft 105 and the output shaft 100 to generate axial translation and to further provide relative power signal, as well as another device of a driving rotation speed detector 300 installed between the active power source rotation shaft 105 and casing 121, whereby the cogenerating type rotation speed and rotation torque detector device 111 is commonly constituted by the aforesaid two devices, and is mainly comprised of the following:
   - An active power source rotation shaft 105: It is driven by the rotational kinetic energy of the active power source 101, wherein a screw interactive structure 201 is provided between the active power source rotation shaft 105 and the shaft hole of the axially translatable rotor 311 of the cogenerating type rotational speed and rotational torque detector device, whereof the screw interactive structure 201 is comprised of a tooth thread or toothless roller thread screw, wherein the screw angle can be bi-directional interactive, i.e. the active power source rotation shaft 105 can be rotated to cause the axially translatable rotor 311 translated axially, or the axially translatable rotor 311 under pressure can reverse drive the active power source rotation shaft 105 to rotate, or the axially translatable rotor 311 can be rotated by itself; a jackshaft assembly for axial translational or rotational transmission or other lock key mechanism 215 for axial sliding and rotational transmission is provided between the axially translatable rotor 311 and the output shaft 100 for driving the output side, thereby to allow for the relative axial translation during the rotational transmission between them while maintaining the transmission status;
   - A pre-compressed spring 202 is installed between the active power source rotation shaft 105 itself and the active power source 101, whereby the axially translatable rotor 311 is pre-compressed, whereby the relative axial translation is produced according to the direction and intensity of the transmission torque during the rotational power transmission between the active power source rotation shaft 105 and the axially translatable rotor 311, thereof the axial translatable rotor 311 is correspondingly coupled with the static structure installed on the casing 121, whereby the detector electric power signal is produced during the rotation interaction, whereof the intensity of the electric power detecting signal is determined by the axial relative coupling position between the axially translatable rotor 311 and the static structure, whereof the axial relative position is determined by the torque difference between the active power source 101 and the output shaft 100, whereby the axial rotational translation produced by the axially translatable rotor 311 and the pre-compressed spring 202 further changes the axial coupling status between the axially translatable rotor 311 and the static structure, and the driving speed detector device 300 is installed between the active power source 101 and the casing 121 for detecting the absolute rotation speed between the two;
   - The cogenerating type rotation speed and rotation torque detector device 111 constituted by the above said axially translatable rotor 311 and the static structure, wherein the static structure can be comprised of the magnetic conducting iron core 313, the first winding 310 as the input AC signal source, and the secondary winding 312 for providing translation detecting power signal and the axially translatable rotor 311 can be comprised of a structure having a magnetic conducting iron core 313 and a shaft hole structure with interactive screw;
   - For the cogenerating type rotation speed and rotation torque detector device 111 constituted by the above said axially translatable rotor 311 and the static structure, regardless the relative position of the axially translatable rotor, when the rotation torque is zero, its output signal can be either zero, or can be set as larger than or smaller than zero;
   - The output signal can be zero when the rotation speed of the aforesaid driving speed detector device 300 is zero;
   - The aforesaid torque difference signal and the absolute rotation speed signal can be either an analog or a digital signal, wherein the analog signal can be synthesized by the analog operational amplifier circuit, whereby it can be treated by the central controller 114 to further control the electrical machine driving device 115 to provide relative power driving from the auxiliary power source 102 and to limit its largest power, wherein for the case of digital signal, the signal is treated by the central controller 114 to further control the electrical machine driving device 115 to provide relative control on the auxiliary power source 102 and to limit its largest power;
   - The mechanical structure which generate the relative activated translation due to the torque difference between the rotating shaft 105 of the above said active power source 101 and the output shaft 101 while maintaining the transmission status between them, whereof it is comprised of the commonly utilized axial or radial bi-directional translation mechanisms, including the bi-directional-actuating screw structure or the bi-directional-actuating internal screw type or external screw type stud-less screw structure, or bi-directional actuating axial bevel surface or bevel gear coupling mechanism, or the detector structure which can convert the bi-directional translation or rotational angular translation into electric power, whereof it is comprised of the AC or DC, brush or brush-less, or induced type structure constituted by the analog or digital photoelectric effect, or electromagnetic effect or other physical effects, whereby a relative power signal in linear or non-linear, positive or reverse proportion is generated through the relative rotational movement, and the power signal ratio is changed due to the axially relative coupling position in linear or non-linear positive or reverse proportional variation;
   - An output shaft 100: It is driven by the rotational kinetic energy of the active power source 101 through the axially translatable rotor 311, and is driven by the rotational kinetic energy of the auxiliary power source 102, wherein the rotating methods with the auxiliary power source 102 include the indirect driving mechanism through transmission components to couple with the auxiliary power source 102, or the direct coupling between the output shaft 100 and the rotor of the auxiliary power source 102, whereof the methods of its coupling with the load include the direct coupling with the load, or through the transmission devices such as gear, chain wheel and linkages to drive the load.
Figure 4 is the operation characteristic diagram of figure 2 and figure 3.
   Figure 4 is a conceptual schematic diagram illustrating the comparisons of the detected results of the said rotation speed and rotation torque detector device 111 in figure 2 and 3, and the interactive relationship between the synthesized voltage signal, rotation speed and the rotation torque, therein the synthesized output voltage, the rotation speed and the rotation torque appear in linear or non-linear proportional interaction, whereof it appears in positive or reverse proportion in normal operation, and the coupling interaction between the axially translatable rotor and the static structure appear in positive or reverse proportion.

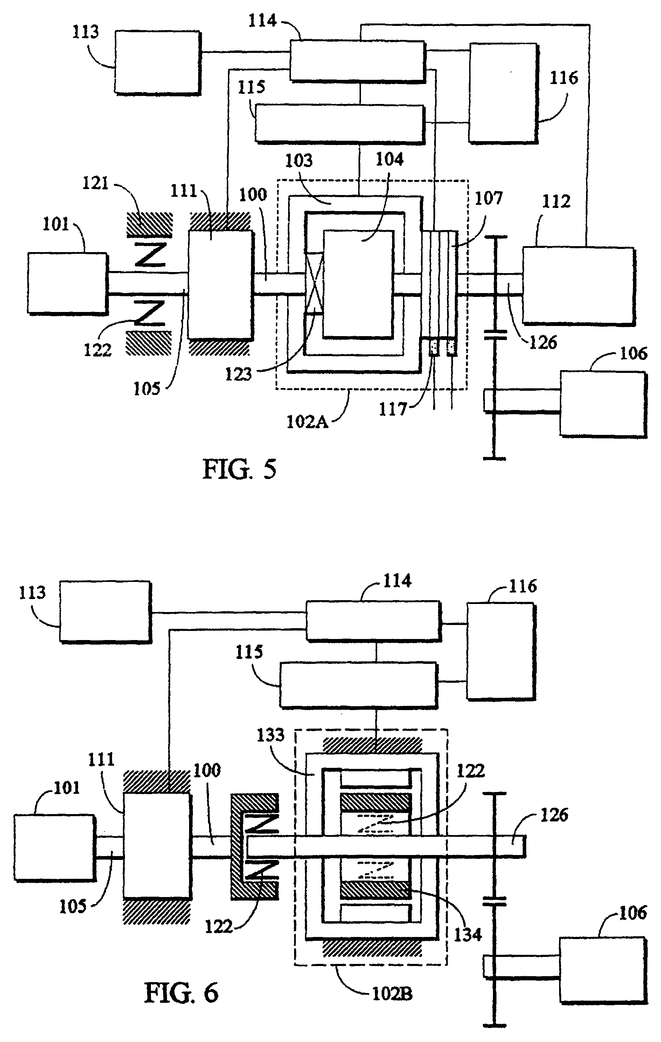

Figures 5∼8 illustrates the application examples constituted by the different auxiliary power sources embodying types, wherein they are described as following:
   (A) Figure 5 is a block schematic diagram of the combined power system using a co-generative type rotation speed and rotation torque detector device for proportional control, wherein the auxiliary power source is a double-acting rotational electrical machine 102A which is comprised of the first interactive rotor 103 and second interactive rotor 104, whereof they are mutually driven and are constituted by the magnetic field and rotors, thereof its structure can be in cylindrical, cup, disk or cone shapes, and their electrical machine structure and its operating embodiments include: DC or AC, synchronous or asynchronous, brush or brush-less rotational electrical machine embodying types, wherein it is characterized in that the first interactive rotor 103 is coupled with the cogenerating type rotation speed and rotation torque detector device 111 through the output shaft 100, and is further coupled with the active power source rotation shaft 105, while the second interactive rotor 104 is directly or through transmission components to drive the rotation output interface 126; wherein an unidirectional clutch 122 can be installed between the active power source rotation shaft 105 and the casing 121 as required for selecting one of the direction to avoid reverse driving, and the unidirectional clutch can be omitted if this function is discarded, thereof for the aforesaid embodying types of the first interactive rotor 103 and the second interactive rotor 104, one of them is in electrical machine field structure and the other is in the electrical machine rotor structure, wherein both or one of them can be further installed with auxiliary conducting ring 107, conducting brush 117 and a brush seat to match with the double-acting embodying types and to transmit power during the double-acting driving, whereof its structure and function features can be selected to include one or several of the following functions at the same time:
      1) The speed addition auxiliary driving function by controlling the speed ratio: The first interactive rotor 103 through the output shaft 100 is coupled with the cogenerating type rotation speed and rotation torque detector device 111 and is further coupled with the active power source 101, while the second interactive rotor 104 is connected to the rotation output interface 126;
      2) A reverse damping function corresponding to the active power source: The second interactive rotor 104 is at standstill, while the first interactive rotor 103 provides reverse torque contrary to the operating direction of the active power source 101, wherein the reverse torque can be smaller than the rotation torque of the active power source 101 and in reverse direction of the active power source;
      3) Kinetic energy recovery of the load 106 inertia or providing the damping function to the back-transferred power of load 106: The first interactive rotor 103 is at standstill, and the second interactive rotor 104 provides regeneration function and to further generate damping.
   (B)Figure 6 is a block schematic diagram of the combined power system using a co-generative type rotation speed and rotation torque detector device for proportional control illustrating that active power source and the auxiliary power source are on the common shaft: The static casing 133 of the auxiliary power source 102B is fixed, while the rotor 134 drives the load 106, thereof the electrical machine embodying types include AC or DC, synchronous or asynchronous, brush or brush-less electrical machines, wherein its embodiment and structure features can be selected to include part or all of the following functions:
      1) The active power source 105 through the unidirectional clutch 122 and the rotation output interface shaft 126 of the electrical machine 102B appears in co-axial structure to drive the load 106, wherein if the system is open type, then the unidirectional clutch 122 can be omitted;
      2) The cogenerating type rotation speed and rotation torque detector device 111 is installed between the active power source rotation shaft 105 or its driven rotational structure and the static structure, whereby it is employed to detect the rotation speed of the active power source 101 and its torque difference with the output shaft 100 for system operation control reference basis;
      3) The torque difference between the active power source and the output shaft 100 detected by the cogenerating type rotation speed and rotation torque detector device is utilized for proportional auxiliary driving function: The active power source is rotated to drive the cogenerative type rotation speed and rotation torque detector device 111, and to further generate the corresponding signal to the central controller 114, while when the rotation speed signal reaches above the setting value, the auxiliary power source electrical machine 102B is driven by the electrical machine driving device 105 to generate the auxiliary driving torque in the same direction with the active power source rotation shaft, and the auxiliary driving torque is controlled according to the setting ratio of the central controller 114, or the auxiliary driving torque is determined by the manual operating device 113, central controller 114 and the random control of the electrical machine driving device 115 on the auxiliary power source electrical machine 102B;
      4) The rotation speed of the auxiliary driving of the auxiliary power source electrical machine 102B and the synthesized driving of the active power source 101 to the load 106 is always smaller than the driven rotation speed by the active power source 101;
      5) The corresponding reverse damping function to the rotation speed of the active power source 101: It is by referring to the rotation speed of the active power source and the torque difference with the output shaft 100 detected by the rotation speed and rotation torque detector device 111 as basis and the auxiliary power source electrical machine 102B is controlled through the central controller 114 to generate reverse damping, whereof the control method is the same as the aforesaid operating process for the auxiliary driving, except that the torque direction and the active power source 101 are contrary to each other, wherein the reverse torque is generated according to the set ratio of the central controller 114 or is by the manual operating device 113 or the central controller 114 through the electrical machine driving device 115 to randomly control the auxiliary power source electrical machine 102B for adjusting the capacity of the reverse torque;
      6) The maximum value of the controllable reverse torque damping of the auxiliary power source electrical machine 102B is always smaller than the driving torque of the active power source 101 on the auxiliary power source electrical machine 102B, or when the system is selected for reverse driving operation, the active power source 101 is reverse driven by the auxiliary power source electrical machine, and while the active power source 101 becomes the reverse driven load, the rotation torque of the auxiliary power source electrical machine 102B is always larger than or equal to the rotation torque of the active power source 101;
      7) Kinetic energy recovery function: The auxiliary power source electrical machine 102B is directly converted to perform generator function, whereby to provide power generation output for mechanical damping.

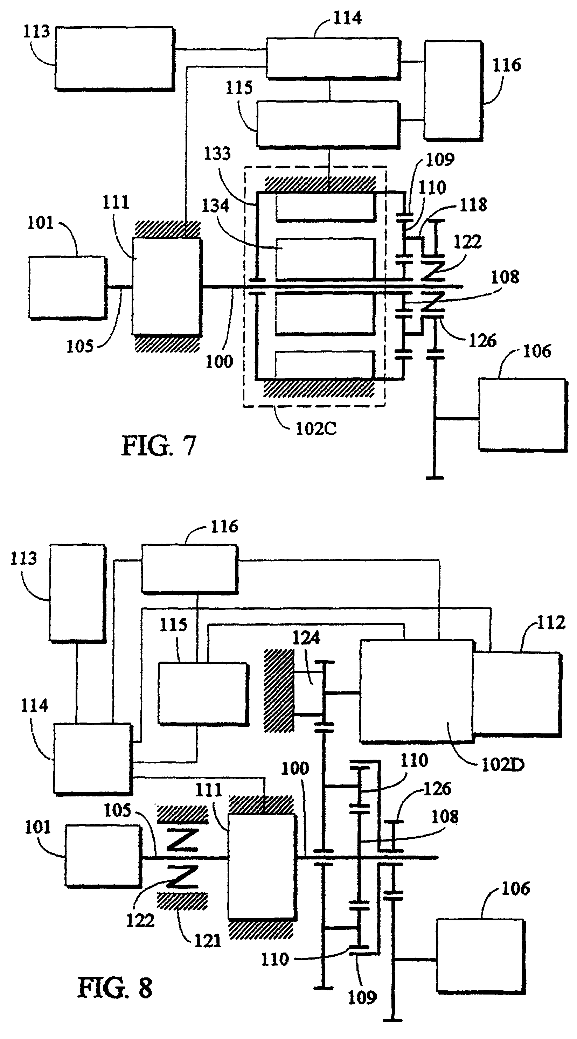

   (C) Figure 7 is the first schematic diagram of the combined power system using a co-generative type rotation speed and rotation torque detector device for proportional control illustrating the embodiment of the electrical machine and the planetary (or differential) wheel system: Wherein the auxiliary power source of the system is constituted by the electrical machine 102C, whereof its electrical machine static casing 133 is fixed, while the load 106 is driven by the rotor 134, whereof the electrical machine types include AC or DC, synchronous or asynchronous, brush or brush-less electrical machine, wherein its structural or function features can be selected to include one or several of the following functions at the same time:
      1) The active power source rotation shaft 105 is coaxially installed with the electrical machine 102C, whereby it is through the unidirectional clutch 122 to couple with the output swing arm 118 driven by the planetary wheel 110 for connecting to the rotation output interface 126, the rotating shaft of the rotor 134 is through the sun wheel 108 and the outer ring wheel 109 of the electrical machine stator casing 133 to couple with the planetary type differential wheel train for connection to the rotational output interface 126, wherein if the system is open type, then the unidirectional clutch 122 can be omitted;
      2) The cogenerating type rotation speed and rotation torque detector device 111 is installed between the active power rotation shaft 105 or its driven rotational structure and the static structure to detect the rotation speed of the active power source 101 and the torque difference with the output shaft 100 for system operation control basis;
      3) The proportional auxiliary driving function according to the rotation speed of the active power source: The cogenerating type rotation speed and rotation torque detector device 111 is driven by the rotation of the active power source 101 to produce corresponding signal and to transmit the signal to the central controller 114, when the rotation signal reaches above the set value, the auxiliary power source electrical machine 102C driven by the electrical machine driving device 115 along with the swing 118 driven by the planetary wheel 110 of the planetary wheel train driven by the active power source rotation shaft through the unidirectional transmission device 122 provides auxiliary driving torque in the same rotation direction, whereby the auxiliary driving torque is controlled according to the set ratio of the central controller 114, or is by the manual operating device 113 or the central controller 114 through the electrical machine driving device 115 to randomly control the auxiliary power source electrical machine 102C for adjusting the capacity of the auxiliary driving torque, wherein if the system is of open type, then the unidirectional clutch 122 can be omitted;
      4) The auxiliary driving by the auxiliary power source 102C and the synthesized driving rotation speed of the active power source 101 to the load 106 is always smaller than the driven rotation speed by the active power source 101;
      5) The corresponding reverse damping function to the rotation speed of the active power source 101: It is by referring to the rotation speed of the active power source and the torque difference with the output shaft 100 detected by the rotation speed and rotation torque detector device 111 as basis and the auxiliary power source electrical machine 102C is controlled through the central controller 114 to generate reverse damping, whereof the control method is the same as the aforesaid operating process for the auxiliary driving, except that the torque direction and the active power source 101 are contrary to each other, wherein the reverse torque is generated according to the set ratio of the central controller 114 or is by the manual operating device 113 or the central controller 114 through the electrical machine driving device 115 to randomly control the capacity of the reverse torque;
      6) The maximum value of the controllable reverse torque damping of the auxiliary power source electrical machine 102C: when the system is selected for reverse driven operation, the active power source 101 becomes the reverse driven load which is reverse driven by the auxiliary power source electrical machine 102C, the rotation torque of the auxiliary power source 102C is always large or equal to the rotation torque of the active power source 101;
      7) Kinetic energy recovery function: The auxiliary power source electrical machine 102C is directly converted to perform generator function, whereby to provide power generation output for mechanical damping.
   (D) Figure 8 is the second schematic diagram of the combined power system using a co-generative type rotation speed and rotation torque detector device for proportional control illustrating the embodiment of the electrical machine and the planetary (or differential) wheel system: whereof the auxiliary power source is constituted by the electrical machine 102D, whereby it is coupled with the active power source through the planetary(or differential) wheel train, whereof its electrical machine types include the AC or DC, synchronous or asynchronous, brush or brush-less electrical machine, wherein its structural or function features include the following functions:
      - A proportional auxiliary driving function: The active power source 101, auxiliary power source electrical machine 102D and the rotational output interface 126 are respectively coupled with the sun wheel 108, planetary wheel 110 and the outer ring wheel 109 according to the relative speed ratio and function requirement, wherein the relationship between the active power source 101 and the auxiliary power source 102D is based on the rotation speed of the active power source detected by the cogenerating type rotation speed and rotation torque detector device 111 to control the auxiliary power source, whereby the proportional auxiliary driving between the two are achieved through the planetary (or differential)wheel train.

   The above said combined power system using a co-generative type rotation speed and rotation torque detector device for proportional control can be further installed with the following peripheral operating devices to expand the rage of applications, wherein it includes the following:
   - An unidirectional clutch 122 can be series installed between the active power source 105 and the rotation output interface 126 for limitation to unidirectional rotation torque transmission, wherein if the system is of open type, then the unidirectional clutch 122 can be omitted;
   - An unidirectional clutch 122 can be further installed between the active power source rotating shaft 105 and the casing 121, whereby the active power source is at standstill while the auxiliary power source drives the load according to the set rotation direction, wherein if the system is of open type, the unidirectional clutch 122 can be omitted;
   - The controllable clutch 123 which can be operated manually, or controlled by the mechanical, fluid or electromagnetic power is further installed between the active power source 105 and the casing 121 to replace the unidirectional clutch 122, whereby when the clutch is released, the auxiliary speed or torque addition driving is performed between the active power source and the auxiliary power source according to corresponding ratio, or a reverse torque damping function is generated by the auxiliary power source to the active power source; thereof when the clutch is closed, the active power source is locked, while the load 106 is positively or reverse driven by the auxiliary power source, or the kinetic energy of the inertia of the load 106 is recovered for power regeneration, wherein if the system is of open type, the above said unidirectional clutch 122 or the controllable clutch 123 can both be omitted, or the controllable clutch can be omitted;
   - When the auxiliary power source is a double-acting rotational electrical machine 102A, the controllable clutch 123 which can be operated manually, or controlled by the mechanical, fluid or electromagnetic power can be installed in between, whereby when the controllable clutch 123 is closed, the double-acting structure is inter-locked to allow the active power source driving the load 106 directly, wherein if the system is of open type, the controllable clutch 123 can be omitted;
   - When the auxiliary power source electrical machine is 102B or 102C, then the electrical machine rotor 134 besides of direct coupling with the active power source 101 and direct connecting with the output shaft of the rotational output interface 126 or indirect coupling through transmission components, an unidirectional clutch 122 can be further installed to match with the interactive requirement between the three, whereof the location for installing the unidirectional clutch 122 and its kinetic energy transmission directivity include: thereof if the active power source is connected to rotational output interface 126 directly or through the transmission components, then the unidirectional clutch 122 is installed between the electrical machine rotor 134 of the auxiliary power source and any rotational component between the above said active power source and the rotational output interface 126, wherein the clutch work rotation direction of the unidirectional clutch 122 can be selected according to the system requirement, thereof if the auxiliary power source electrical machine rotor 134 is directly or through the transmission components to connect to the rotational output interface 126, then the unidirectional clutch 122 can be installed between the active power source 101 and any rotation component between the above said auxiliary power source 102B or 102C and the rotational output interface 126, wherein the clutch work rotation direction of the unidirectional clutch 122 can be selected according to the system requirements, wherein if the system is of open type, then the unidirectional clutch 122 can be omitted;
   - When the auxiliary power source electrical machine 102D is coupled with the active power source through the planetary(or differential) wheel train, then a brake 124 can be further installed on the rotation shaft of the auxiliary power source electrical machine 102D, thereby to lock up the auxiliary power source and its transmission components while allowing the active power source directly drives the rotational output interface 126, or for the case of kinetic energy recovery, to lock up the active power source 101 while allowing the active power source electrical machine 102D reverse driven by the inertia of load 106 to do power regeneration and produce braking damping, wherein if the system is of open type, then the brake 124 can be omitted.

   In practical applications, the clutches and the control systems can be selected to include part or all of the following functions:
   - By referring to the rotation speed of the active power source and the torque difference with the output shaft 100 as basis, the auxiliary power source is controlled for auxiliary driving;
   - By referring to the rotation speed of the active power source and the torque difference with the output shaft 100 as basis, the auxiliary power source is operated to appear reverse torque corresponding to the active power source for providing damping, as well as on the foundation of the above said functions or part of them to further provide the auxiliary functions or part of them including controlling the auxiliary power source for positive or reverse directional driving independently, or power regeneration or kinetic energy recovery.

   In addition, to meet the different requirements in the simpler applications, which do not form part of the invention, the system operations in the aforesaid embodying examples can be simplified by employing the active power source speed detector device 900 exclusively to substitute for the rotation speed and torque difference detector device 111; therein the various applications and functions of the controllable combined power system exclusively using the rotation speed of the active power source for proportional control reference are delineated as follows:

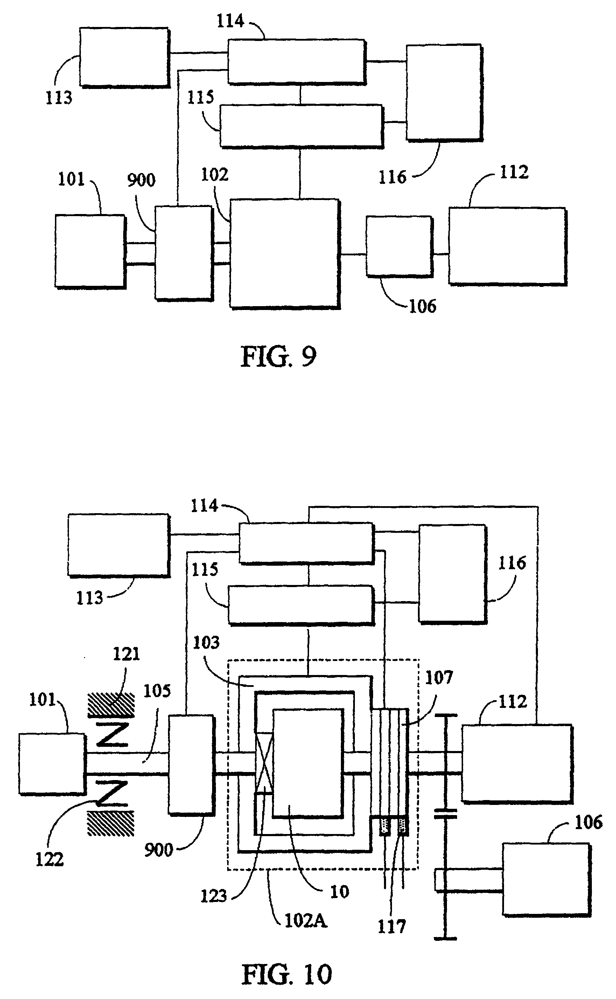

Figure 9 is a system block schematic diagram of a controllable combined power system exclusively using the rotation speed of the active power source for proportional control reference, wherein it is mainly comprised of the following:
   - An active power source 101: It is a power device driven manually or by electric power or other mechanical power and is capable of performing rotational movements, whereof its power output shaft is directly coupled or power coupled with the auxiliary power source or load through unidirectional transmission devices;
   - An active power source speed detector device 900: It is an analog or digital rotation speed and rotation torque detector device which can be used to detect the rotation speed and direction of rotating shaft of the active power source for the control basis;
   - An auxiliary speed detector device 112: It is an analog or digital type rotation speed detector device which is installed to detect the rotation speed of the auxiliary power source or the output shaft and input such signal to the central controller 114 to establish a feedback circuit loop, whereof it can be omitted for an open type system;
   - A manual operating device 113: It is a input control device comprised of electromechanical or solid state electronic components as well as the relevant control mechanism interfaces, wherein it can be manually operated to produce digital or analog electric power signal or to receive inputs from other electric power signal interfaces for transmitting to the central controller 114 to select system functions or to do setting or to randomly control the auxiliary driving ratio or damping ratio parameters for transmitting to the central controller 114, thereby to control the auxiliary driving ratio of the auxiliary power source, auxiliary driving torque ratio or reverse damping ratio;
   - A central controller 114: It is an analog or digital electric circuit device comprised of electromechanical or solid state electronic components, or microprocessors, wherein it refers to the cogenerating type rotation speed detector device 900 driven by the active power source 101 and the random commands from the manual operating device to control the electrical driving device 115 on the speed, rotating direction or torque of the auxiliary power source 102,whereby to drive it for power regeneration function operation and to further control the peripheral operating devices such as clutches; therein the operation between the active power source, auxiliary power source and the output shaft can be either linear or non-linear proportional auxiliary driving or proportional damping functions as required, and the system can be a closed ring type, open ring type, or semi-closed ring type constructions;
   - An electrical machine driving device 115: It is comprised of electromechanical or solid state electronic device, wherein it is operated by the control of the central controller 114 or by the manual operating device 113 to control the input/output power and the rotational directions of the auxiliary power source;
   - A power supply 116: It provides the needed supply power to the auxiliary power source, central controller, electrical machine driving device, the input operating device and the peripheral control devices or to further reserve the regeneration power from the auxiliary power source;
   - An Auxiliary power source 102: It is a motor driven by electric power, whereof its embodying types are comprised of a double-acting rotational electrical machine 102A or electrical machines 102C,102C or 102D, wherein the coupling methods of the different embodying types with the active power source 101 has different operating functions:
      (A) Figure 10 is a system block schematic diagram of a controllable combined power system constituted by a double-acting rotational electrical machine structure exclusively using the rotation speed of the active power source for proportional control reference, wherein except for that the speed detector device 900 supersedes the rotational speed and torque detector device 111, thereby to let the system be operated according to the speed detector device 900, its structure and interactive operations are the same as in the embodying example of figure 5.

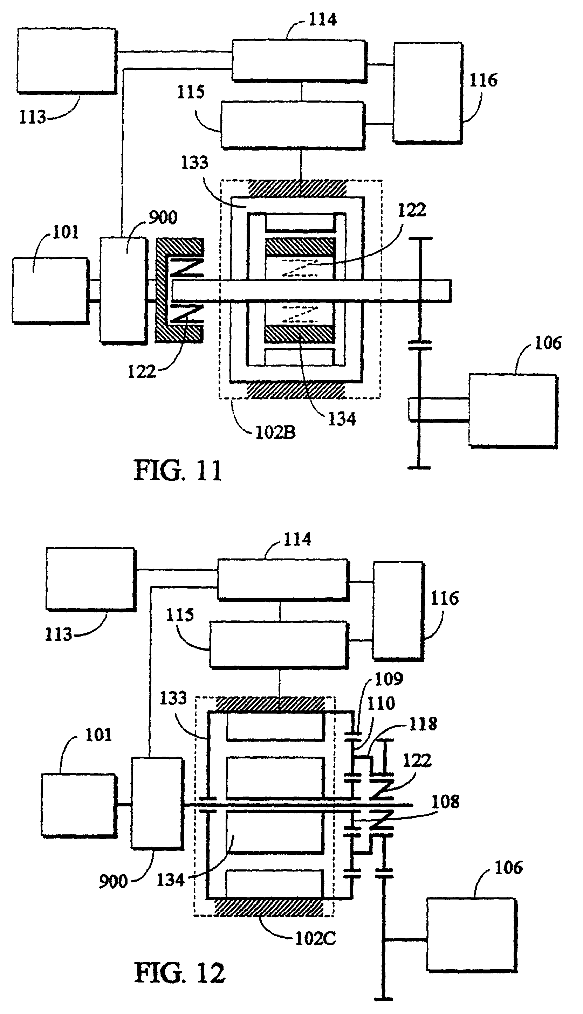

      (B) Figure 11 is a system block schematic diagram of a controllable combined power system constituted by an active power source on a common shaft type electrical machine structure exclusively using the rotation speed of the active power source for proportional control reference, wherein except for that the speed detector device 900 supersedes the rotational speed and torque detector device 111, thereby to let the system be operated according to the speed detector device 900, its structure and interactive operations are the same as in the embodying example of figure 6.
      (C) Figure 12 is the first system block schematic diagram of a controllable combined power system constituted by an electrical machine structure and planetary (or differential) wheel train exclusively using the rotation speed of the active power source for proportional control reference, wherein except for that the speed detector device 900 supersedes the rotational speed and torque detector device 111, thereby to let the system be operated according to the speed detector device 900, its structure and interactive operations are the same as in the embodying example of figure 7.

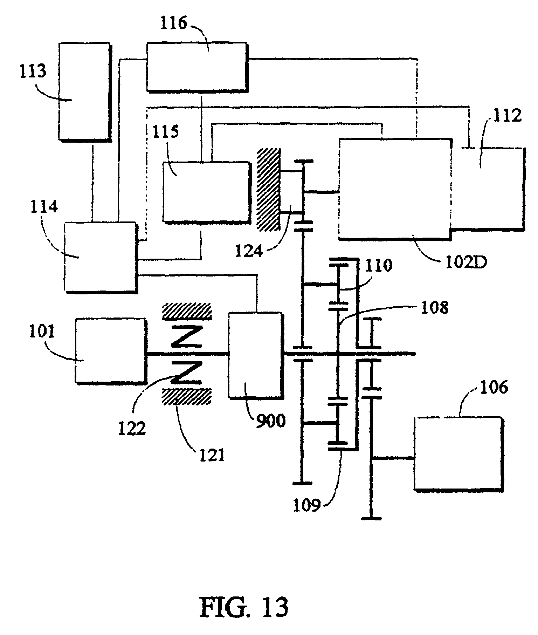

      (D) Figure 13 is the second system block schematic diagram of a controllable combined power system constituted by an electrical machine structure and planetary (or differential) wheel train exclusively using the rotation speed of the active power source for proportional control reference, wherein except for that the speed detector device 900 supersedes the rotational speed and torque detector device 111, thereby to let the system be operated according to the speed detector device 900, its structure and interactive operations are the same as in the embodying example of figure 8.

   The aforesaid controllable combined power system exclusively using the rotation speed of the active power source for proportional control reference can be further installed with the following peripheral control devices to expand its application range:
   - An unidirectional clutch 122 can be installed between the output rotating shaft 105 of the active power source 101 and the load 106 for unidirectional torque transmission limitations; or
   - An unidirectional clutch 122 can be installed between the output rotating shaft 105 of the active power source 101 and the load 106, wherein while the auxiliary power source drives the load according to the set rotating direction, the active power source is at standstill; or
   - A clutch operated manually, or controlled by the mechanical, fluid or electromagnetic power is further installed between the output rotating shaft 105 of the active power source 101 and the casing 121 to substitute for the unidirectional clutch 122; therein when the clutch is released, the active power source and the auxiliary power source undertake the speed or torque addition auxiliary driving, or the auxiliary power source generates reverse torque damping function corresponding to the active power source and when the clutch is closed, the active power source appears locked up while the auxiliary power source provide positive or reverse direction driving or kinetic energy recovery operations; or
   - When the active power source is a double-acting type rotational electrical machine 102A, the clutch 123 which is operated manually, or controlled by the mechanical, fluid or electromagnetic power can further installed between them, and when the clutch 123 is closed, the double-acting structure appears at the interlocked status while the active power source drives the load directly;
   - When the auxiliary power source electrical machine is 102B or 102C, then the electrical machine rotor 134 of the auxiliary power source besides of direct coupling with the active power source and direct connecting with the output shaft of the load directly or through transmission components, an unidirectional clutch 122 can be further installed to match with the interactive requirement between the three, whereof the location for installing the unidirectional clutch 122 and its kinetic energy transmission directivity include: thereof if the active power source is connected to the load directly or through the transmission components, then the unidirectional clutch 122 is installed between the electrical machine rotor 134 of the auxiliary power source and any rotational component between the above said active power source and the load, wherein the clutch work rotation direction of the unidirectional clutch 122 can be selected according to the system requirement, thereof if the auxiliary power source electrical machine rotor 134 is connected to the load directly or through the transmission components, then the unidirectional clutch 122 can be installed between the active power source and any rotation component between the above said auxiliary power source and the load, wherein the clutch work rotation direction of the unidirectional clutch 122 can be selected according to the system requirements;
   - For an auxiliary power source comprised of the electrical machine 102D coupling with the active power source through the planetary (or differential) wheel train, a brake 124 can be further installed on rotating shaft of the auxiliary power source electrical machine 102D, thereby to lock up the auxiliary power source and its transmission components while the load is directly driven by the active power source, or for the case of kinetic energy recovery, the active power source is locked up while the auxiliary power source is reverse driven for power generation braking.

   In practical applications, the clutch and operating control system can be selected to adopt all or part of the following functions:
   - By referring to the rotation speed of the active power source as control reference basis, the auxiliary power source is operated to provide speed addition auxiliary driving corresponding to the rotation speed ratio, or to provide torque auxiliary driving at the same direction as that of the active power source; or includes:
   - By referring to the rotation speed of the active power source as control reference basis, the auxiliary power source is operated to appear reverse torque corresponding to the active power source for providing damping, as well as on the foundation of the above said functions or part of them to further provide the auxiliary functions or part of them including controlling the auxiliary power source for positive or reverse directional driving independently, or power regeneration or kinetic energy recovery.

As summarized from the above descriptions, the combined power system uses a co-generative type rotation speed and rotation torque detector device for proportional control. It refers to the rotation speed of the active power source and the torque difference with the output shaft as control basis to correspondingly control the linear or non-linear proportional auxiliary driving between the active power source and the auxiliary power source, or to provide damping to the active power source through the reverse torque generated by the auxiliary power source. This system is innovative and is widely applicable in auxiliary driving of control mechanisms, electricity assisted carriers, controllable damping devices, etc.

## Claims

1. A combined driving apparatus comprising:
a primary power source (101) having a rotating shaft (105) for driving an output shaft (100) via a device (111);
an auxiliary power source (102) for driving or for braking the output shaft (100); means (114) for controlling the auxiliary power source (102);
**characterised in that** the device (111) comprises a rotation speed and torque difference detector for detecting the rotational speed of the output shaft (100) and for detecting the torque difference between the rotating shaft (105) and the output shaft (100); and **in that** the control means (114) uses the rotational speed signal of the output shaft (100) and the torque difference between the rotating shaft (105) and the output shaft (100) as the control reference basis.

2. The apparatus according to claim 1, **characterised in that** the interaction between the primary power source (101), auxiliary power source (102) and the output shaft (100) includes all or part of the following functions:
• By referring to the rotational speed signal of the output shaft (100) and the detected torque difference as the basis, the auxiliary power source (102) provides correspondingly proportional auxiliary driving to commonly drive the load together with the primary power source (101)
• The primary power source (101) drives the load independently;
• The auxiliary power source (102) drives the load independently;
• By referring to the rotational speed signal of the output shaft (100) and the detected torque difference as the basis, the auxiliary power source (102) provides power regeneration effect or the counter driving to generate a correspondingly reverse braking power to limit the output shaft (100) and the load;
• By referring to the rotational speed signal of the output shaft (100) and the detected torque difference as the basis, the auxiliary power source (102) provides power regeneration effect or the counter driving to generate a reverse damping through the correspondingly reverse kinetic energy;
• The output shaft (100) is lock fixed to possess the function of item 5 independently.

3. The apparatus according to claim 1 to 2, wherein it is by using the rotational speed signal of the output shaft (100) and the detected torque difference as the reference to control the auxiliary power source (102) to provide additive auxiliary driving in the same direction according to the preset corresponding auxiliary driving ratio, whereof the auxiliary driving includes: 1) To provide unidirectional or double-directional auxiliary driving, whereof the auxiliary driving ratio between the primary power source (101) and the auxiliary power source (102) can be by using the rotational speed of the output shaft (100) and the detected torque difference to do preset ratio auxiliary driving or to do random control by manual operating device; 2) To provide reverse damping function status of the output inertia, wherein the auxiliary power source (102) is controlled by a manual operating device or by the rotational speed of the output shaft (100) and the detected torque difference whereby it is through the power regeneration effect or counter driving to provide the reverse torque as the damping, or 3) To be as the load damping of the primary power source (101), wherein the auxiliary power source (102) is randomly controlled by a manually operated device or is controlled by using the rotational speed of the output shaft (100) and the detected torque difference as the control basis, and is further through the power regeneration effect or counter driving to generate load damping.

4. The apparatus according to any one of the claims 1 to 3, wherein its basic embodiment includes the following:
• A primary power source (101) which is a power device driven manually or by electric power or other mechanical power and is capable of performing rotational movements, whereof its rotating shaft (105) is directly coupled or power coupled with an auxiliary power source 102 or load 106 through unidirectional devices with the auxiliary power source of the load;
• An co-generative type rotation speed and rotation torque detector device 111 which is an analog or digital rotation speed and rotation torque detector device which can be used to detect the rotation speed and direction of output shaft 100 and the torque difference between the output shaft 100 and the rotating shaft (105) for the control basis, whereof the detecting signal is generated by the electromagnetic effect or photoelectric effect or other physical effects, whereof the co-generation method is comprised of having one single detected structure to produce synthesized signal of the rotation speed and the rotation torque difference or synthesizing the separated signals from the two individual detected structure;
• An auxiliary speed detector device 112 which is an analog or digital type rotation speed detector device which is installed to detect the rotation speed of the auxiliary power source or the output shaft and input such signal to the central controller 114 to provide speed limiting or other output speed control signal feedback, whereof it can be omitted for an open type system;
• The mechanical structure which generate the relative activated translation due to the torque difference between the rotating shaft 105 of the above said primary power source 101 and the output shaft 100 while maintaining the transmission status between them, whereof it is comprised of the commonly utilized axial or radial bi-directional translation mechanisms, including the bi-directional-actuating screw structure or the bi-directional-actuating internal screw type or external screw type stud-less screw structure, or bi-directional-actuating axial bevel surface or bevel gear coupling mechanism, or the detector structure which can convert the bi-directional translation or rotational angular translation into electric power, whereof it is comprised of the AC or DC, brush or brush-less, or induced type structure constituted by the analog or digital photoelectric effect, or electromagnetic effect or other physical effects, whereby a relative power signal in linear or non-linear, positive or reverse proportion is generated through the relative rotational movement, and the power signal ratio is changed due to the axially relative coupling position in linear or non-linear positive or reverse proportional variation;
• An output shaft 100 which is installed between the output side and the rotation speed and rotation torque detector device 111 for transmitting the rotational kinetic energy;
• A manual operating device 113 which is a input control device comprised of electromechanical or solid state electronic components as well as the relevant control mechanism interfaces, wherein it can be manually operated to produce digital or analog electric power signal or to receive inputs from other electric power signal interfaces for transmitting to the central controller 114, and for further controlling the operating power of the auxiliary power source in order to provide proportional auxiliary driving or proportional reverse damping;
• A control means 114 which is an analog or digital electric circuit device comprised of electromechanical or solid state electronic components, or microprocessors, wherein it refers to the cogenerating type rotation speed and rotation torque detector device 111 driven by the primary power source 101 and the random commands from the manual operating device 113 to control the electrical driving device 115 and further to drive the auxiliary power source 102 for motor function operation or power regeneration function operation; therein the operation between the primary power source 101, auxiliary power source 102 and the output shaft 100 can be either linear or non-linear proportional auxiliary driving or proportional damping functions as required, and the system can be a closed ring type, open ring type, or semi-closed ring type constructions;
• An electrical machine driving device 115 which is comprised of electromechanical or solid state electronic device, wherein it is operated by the control of the control means 114 or by the manual operating device 113 to control the input/output power and the rotational directions of the auxiliary power source 102;
• An Auxiliary power source 102 which is a rotational electrical machine which has motor functions or further has the generator functions, whereof its embodying types are comprised of a double-acting rotational electrical machine 102A or of a static and rotor combination electrical machines 102C,102C or 102D, wherein the coupling methods of the different embodying types with the primary power source 101 has different operating functions;
• A power supply 116 which provides the needed supply power to the auxiliary power source, central controller, electrical machine driving device, the input operating device and the peripheral control devices or to further reserve the regeneration power from the auxiliary power source;
• A load 106 which is constituted by the rotational or linear translational mechanism accepting the
rotational power input.

5. The apparatus according to any one of claims 1 to 4, wherein it is comprised of the following:
• A primary power source rotation shaft 105 which is driven by the rotational kinetic energy of the primary power source 101, wherein a screw interactive structure 201 is provided between the primary power source rotation shaft 105 and the shaft hole of the axially translatable rotor 211 of the cogenerating type rotational speed and rotational torque detector device, whereof the screw interactive structure 201 is comprised of a tooth thread or toothless roller thread screw, wherein the screw angle can be bi-directional interactive, i.e. the primary power source rotation shaft 105 can be rotated to cause the axially translatable rotor 211 translated axially, or the axially translatable rotor 211 under pressure can reverse drive the primary power source rotation shaft 105 to rotate, or the axially translatable rotor 211 can be rotated by itself; a jackshaft assembly for axial translational or rotational transmission or other lock key mechanism 215 for axial sliding and rotational transmission is provided between the axially translatable rotor 211 and the output shaft 100 for driving the output side, thereby to allow for the relative axial translation during the rotational transmission between them while maintaining the transmission status;
• A pre-compressed spring 202 is installed between the primary power source rotation shaft 105 itself and the primary power source 101, whereby the axially translatable rotor 211 is pre-compressed, whereby the relative axial translation is produced according to the direction and intensity of the transmission torque during the rotational power transmission between the primary power source rotation shaft 105 and the axially translatable rotor 211, thereof the axial translatable rotor 211 is correspondingly coupled with the static structure installed on the casing 121, whereby the detector electric power signal is produced during the rotation interaction, whereof the intensity of the electric power detecting signal is determined by the relative rotation speed and the axial coupling positions between the axially translatable rotor 211 and the static structure, thereof the rotation speed is determined by the absolute rotation speed between the primary power source 101 and the casing 121, and the axial relative positions is determined by the torque difference between the active power source 101 and the output shaft 100, whereby the axial rotational translation produced by the axially translatable rotor 211 and the pre-compressed spring 202 further changes the axial coupling status between the axially translatable rotor 211 and the static structure;
• The cogenerating type rotation speed and rotation torque detector device 111 constituted by the above said axially translatable rotor 211 and the static structure, wherein the static structure can be comprised of the magnetic conducting iron core 213 and the electric power detector winding 212, and the axially translatable rotor 211 can be comprised of a structure having a magnetic pole 216 and a shaft hole with interacting screw, whereof the structure between the static structure and the axially translatable rotor can be constituted by a cylindrical or bevel cone structure;
• For the cogenerating type rotation speed and rotation torque detector device 111 constituted by the above said axially translatable rotor 211 and the static structure, wherein when the rotation torque is zero, its output signal can be either zero, or can be set as larger than or smaller than zero;
• For the cogenerating type rotation speed and rotation torque detector device 111 constituted by the above said axially translatable rotor 211 and the static structure, when the rotation speed is zero, its output signal can be either zero, or can be otherwise set to be larger than or smaller than zero;
• The detected signal by the cogenerating type rotation speed and rotation torque detector device 111 can be an analog or a digital signal, wherein the analog signal can be through the analog operational amplifier circuit for signal comparison or signal synthesis, whereby it can be treated by the central controller 114 to further control the electrical machine driving device 115 to provide relative power driving from the auxiliary power source 102 and to limit its largest power, wherein for the case of digital signal, the signal is treated by the central controller 114 to further control the electrical machine driving device 115 to provide relative control on the auxiliary power source 102 and to limit its largest power;
• The mechanical structure which generate the relative activated translation due to the torque difference between the rotating shaft 105 of the above said primary power source 101 and the output shaft 101 while maintaining the transmission status between them, whereof it is comprised of the commonly utilized axial or radial bi-directional translation mechanisms, including the bi-directional-actuating screw structure or the bi-directional-actuating internal screw type or external screw type stud-less screw structure, or bi-directional actuating axial bevel surface or bevel gear coupling mechanism, or the detector structure which can convert the bi-directional translation or rotational angular translation into electric power, whereof it is comprised of the AC or DC, brush or brush-less, or induced type structure constituted by the analog or digital photoelectric effect, or electromagnetic effect or other physical effects, whereby a relative power signal in linear or non-linear, positive or reverse proportion is generated through the relative rotational movement, and the power signal ratio is changed due to the axially relative coupling position in linear or non-linear positive or reverse proportional variation;
• An output shaft 100 which is driven by the rotational kinetic energy of the primary power source 101 through the axially translatable rotor 211, and is driven by the rotational kinetic energy of the auxiliary power source 102, wherein the rotating methods with the auxiliary power source 102 include the indirect driving mechanism through transmission components to couple with the auxiliary power source 102, or the direct coupling between the output shaft 100 and the rotor of the auxiliary power source 102, whereof the methods of its coupling with the load include the direct coupling with the load, or through the transmission devices such as gear, chain wheel and linkages to drive the load.

6. The apparatus according to any one of claims 1 to 4, wherein its main structure is characterized to be comprised of an axially translatable rotor 311 and the static structure for detecting the torque difference between the active power source rotation shaft 105 and the output shaft 100 to generate axial translation and to further provide relative power signal, as well as another device of a driving rotation speed detector 300 installed between the active power source rotation shaft 105 and casing 121, whereby the cogenerating type rotation speed and rotation torque detector device 111 is commonly constituted by the aforesaid two devices, and is mainly comprised of the following:
• A primary power source rotation shaft 105 which is driven by the rotational kinetic energy of the primary power source 101, wherein a screw interactive structure 201 is provided between the primary power source rotation shaft 105 and the shaft hole of the axially translatable rotor 311 of the cogenerating type rotational speed and rotational torque detector device, whereof the screw interactive structure 201 is comprised of a tooth thread or toothless roller thread screw, wherein the screw angle can be bi-directional interactive, i.e. the primary power source rotation shaft 105 can be rotated to cause the axially translatable rotor 311 translated axially, or the axially translatable rotor 311 under pressure can reverse drive the primary power source rotation shaft 105 to rotate, or the axially translatable rotor 311 can be rotated by itself; a jackshaft assembly for axial translational or rotational transmission or other lock key mechanism 215 for axial sliding and rotational transmission is provided between the axially translatable rotor 311 and the output shaft 100 for driving the output side, thereby to allow for the relative axial translation during the rotational transmission between them while maintaining the transmission status;
• A pre-compressed spring 202 is installed between the primary power source rotation shaft 105 itself and the primary power source 101, whereby the axially translatable rotor 311 is pre-compressed, whereby the relative axial translation is produced according to the direction and intensity of the transmission torque during the rotational power transmission between the primary power source rotation shaft 105 and the axially translatable rotor 311, thereof the axial translatable rotor 311 is correspondingly coupled with the static structure installed on the casing 121, whereby the detector electric power signal is produced during the rotation interaction, whereof the intensity of the electric power detecting signal is determined by the axial relative coupling position between the axially translatable rotor 311 and the static structure, whereof the axial relative position is determined by the torque difference between the primary power source 101 and the output shaft 100, whereby the axial rotational translation produced by the axially translatable rotor 311 and the pre-compressed spring 202 further changes the axial coupling status between the axially translatable rotor 311 and the static structure, and the driving speed detector device 300 is installed between the primary power source 101 and the casing 121 for detecting the absolute rotation speed between the two;
• The cogenerating type rotation speed and rotation torque detector device 111 constituted by the above said axially translatable rotor 311 and the static structure, wherein the static structure can be comprised of the magnetic conducting iron core 313, the first winding 310 as the input AC signal source, and the secondary winding 312 for providing translation detecting power signal and the axially translatable rotor 311 can be comprised of a structure having a magnetic conducting iron core 313 and a shaft hole structure with interactive screw;
• For the cogenerating type rotation speed and rotation torque detector device 111 constituted by the above said axially translatable rotor 311 and the static structure, regardless the relative position of the axially translatable rotor, when the rotation torque is zero, its output signal can be either zero, or can be set as larger than or smaller than zero;
• The output signal can be zero when the rotation speed of the aforesaid driving speed detector device 300 is zero;
• The aforesaid torque difference signal and the absolute rotation speed signal can be either an analog or a digital signal, wherein the analog signal can be synthesized by the analog operational amplifier circuit, whereby it can be treated by the central controller 114 to further control the electrical machine driving device 115 to provide relative power driving from the auxiliary power source 102 and to limit its largest power, wherein for the case of digital signal, the signal is treated by the central controller 114 to further control the electrical machine driving device 115 to provide relative control on the auxiliary power source 102 and to limit its largest power;
• The mechanical structure which generate the relative activated translation due to the torque difference between the rotating shaft 105 of the above said primary power source 101 and the output shaft 101 while maintaining the transmission status between them, whereof it is comprised of the commonly utilized axial or radial bi-directional translation mechanisms, including the bi-directional-actuating screw structure or the bi-directional-actuating internal screw type or external screw type stud-less screw structure, or bi-directional actuating axial bevel surface or bevel gear coupling mechanism, or the detector structure which can convert the bi-directional translation or rotational angular translation into electric power, whereof it is comprised of the AC or DC, brush or brush-less, or induced type structure constituted by the analog or digital photoelectric effect, or electromagnetic effect or other physical effects, whereby a relative power signal in linear or non-linear, positive or reverse proportion is generated through the relative rotational movement, and the power signal ratio is changed due to the axially relative coupling position in linear or non-linear positive or reverse proportional variation;
• An output shaft 100 which is driven by the rotational kinetic energy of the primary power source 101 through the axially translatable rotor 311, and is driven by the rotational kinetic energy of the auxiliary power source 102, wherein the rotating methods with the auxiliary power source 102 include the indirect driving mechanism through transmission components to couple with the auxiliary power source 102, or the direct coupling between the output shaft 100 and the rotor of the auxiliary power source 102, whereof the methods of its coupling with the load include the direct coupling with the load, or through the transmission devices such as gear, chain wheel and linkages to drive the load.

7. The apparatus according to any one of claims 1 to 4, wherein the auxiliary power source is a double-acting rotational electrical machine 102A which is comprised of the first interactive rotor 103 and second interactive rotor 104, whereof they are mutually driven and are constituted by the magnetic field and rotors, thereof its structure can be in cylindrical, cup, disk or cone shapes, and their electrical machine structure and its operating embodiments include: DC or AC, synchronous or asynchronous, brush or brush-less rotational electrical machine embodying types, wherein it is **characterized in that** the first interactive rotor 103 is coupled with the cogenerating type rotation speed and rotation torque detector device 111 through the output shaft 100, and is further coupled with the primary power source rotation shaft 105, while the second interactive rotor 104 is directly or through transmission components to drive the rotation output interface 126; wherein an unidirectional clutch 122 can be installed between the primary power source rotation shaft 105 and the casing 121 as required for selecting one of the direction to avoid reverse driving, and the unidirectional clutch can be omitted if this function is discarded, thereof for the aforesaid embodying types of the first interactive rotor 103 and the second interactive rotor 104, one of them is in electrical machine field structure and the other is in the electrical machine rotor structure, wherein both or one of them can be further installed with auxiliary conducting ring 107, conducting brush 117 and a brush seat to match with the double-acting embodying types and to transmit power during the double-acting driving, whereof its structure and function features can be selected to include one or several of the following functions at the same time:
1) The speed addition auxiliary driving function by controlling the speed ratio: The first interactive rotor 103 through the output shaft 100 is coupled with the cogenerating type rotation speed and rotation torque detector device 111 and is further coupled with the primary power source 101, while the second interactive rotor 104 is connected to the rotation output interface 126;
2) A reverse damping function corresponding to the primary power source: The second interactive rotor 104 is at standstill, while the first interactive rotor 103 provides reverse torque contrary to the operating direction of the primary power source 101, wherein the reverse torque can be smaller than the rotation torque of the primary power source 101 and in reverse direction of the primary power source;
3) Kinetic energy recovery of the load 106 inertia or providing the damping function to the back-transferred power of load 106: The first interactive rotor 103 is at standstill, and the second interactive rotor 104 provides regeneration function and to further generate damping.

8. The apparatus according to any one of claims 1 to 4, wherein it is constituted by the primary power source and the auxiliary power source installed on the common shaft, whereof the static casing 133 of the auxiliary power source 102B is fixed, while the rotor 134 drives the load 106, thereof the electrical machine embodying types include AC or DC, synchronous or asynchronous, brush or brush-less electrical machines, wherein its embodiment and structure features can be selected to include part or all of the following functions:
1) The primary power source 105 through the unidirectional clutch 122 and the rotation output interface shaft 126 of the electrical machine 102B appears in co-axial structure to drive the load 106, wherein if the system is open type, then the unidirectional clutch 122 can be omitted;
2) The cogenerating type rotation speed and rotation torque detector device 111 is installed between the primary power source rotation shaft 105 or its driven rotational structure and the static structure, whereby it is employed to detect the rotation speed of the primary power source 101 and its torque difference with the output shaft 100 for system operation control reference basis;
3) The torque difference between the primary power source and the output shaft 100 detected by the cogenerating type rotation speed and rotation torque detector device is utilized for proportional auxiliary driving function: The primary power source is rotated to drive the cogenerative type rotation speed and rotation torque detector device 111, and to further generate the corresponding signal to the central controller 114, while when the rotation speed signal reaches above the setting value, the auxiliary power source electrical machine 102B is driven by the electrical machine driving device 105 to generate the auxiliary driving torque in the same direction with the primary power source rotation shaft, and the auxiliary driving torque is controlled according to the setting ratio of the central controller 114, or the auxiliary driving torque is determined by the manual operating device 113, central controller 114 and the random control of the electrical machine driving device 115 on the auxiliary power source electrical machine 102B;
4) The rotation speed of the auxiliary driving of the auxiliary power source electrical machine 102B and the synthesized driving of the primary power source 101 to the load 106 is always smaller than the driven rotation speed by the primary power source 101;
5) The corresponding reverse damping function to the rotation speed of the active power source 101: It is by referring to the rotation speed of the primary power source and the torque difference with the output shaft 100 detected by the rotation speed and rotation torque detector device 111 as basis and the auxiliary power source electrical machine 102B is controlled through the central controller 114 to generate reverse damping, whereof the control method is the same as the aforesaid operating process for the auxiliary driving, except that the torque direction and the primary power source 101 are contrary to each other, wherein the reverse torque is generated according to the set ratio of the central controller 114 or is by the manual operating device 113 or the central controller 114 through the electrical machine driving device 115 to randomly control the auxiliary power source electrical machine 102B for adjusting the capacity of the reverse torque;
6) The maximum value of the controllable reverse torque damping of the auxiliary power source electrical machine 102B is always smaller than the driving torque of the primary power source 101 on the auxiliary power source electrical machine 102B, or when the system is selected for reverse driving operation, the primary power source 101 is reverse driven by the auxiliary power source electrical machine, and while the primary power source 101 becomes the reverse driven load, the rotation torque of the auxiliary power source electrical machine 102B is always larger than or equal to the rotation torque of the primary power source 101;
7) Kinetic energy recovery function: The auxiliary power source electrical machine 102B is directly converted to perform generator function, whereby to provide power generation output for mechanical damping.

9. The apparatus according to any one of claims 1 to 4, wherein it is comprised of the electrical machines and the planetary or differential wheel train, whereof the auxiliary power source of the system is constituted by the electrical machine 102C, whereof its electrical machine static casing 133 is fixed, while the load 106 is driven by the rotor 134, whereof the electrical machine types include AC or DC, synchronous or asynchronous, brush or brush-less electrical machine, wherein its structural or function features can be selected to include one or several of the following functions at the same time:
1) The primary power source rotation shaft 105 is coaxially installed with the electrical machine 102C, whereby it is through the unidirectional clutch 122 to couple with the output swing arm 118 driven by the planetary wheel 110 for connecting to the rotation output interface 126, the rotating shaft of the rotor 134 is through the sun wheel 108 and the outer ring wheel 109 of the electrical machine stator casing 133 to couple with the planetary type differential wheel train for connection to the rotational output interface 126, wherein if the system is open type, then the unidirectional clutch 122 can be omitted;
2) The cogenerating type rotation speed and rotation torque detector device 111 is installed between the primary power rotation shaft 105 or its driven rotational structure and the static structure to detect the rotation speed of the primary power source 101 and the torque difference with the output shaft 100 for system operation control basis;
3) The proportional auxiliary driving function according to the rotation speed of the primary power source: The cogenerating type rotation speed and rotation torque detector device 111 is driven by the rotation of the primary power source 101 to produce corresponding signal and to transmit the signal to the central controller 114, when the rotation signal reaches above the set value, the auxiliary power source electrical machine 102C driven by the electrical machine driving device 115 along with the swing 118 driven by the planetary wheel 110 of the planetary wheel train driven by the active power source rotation shaft through the unidirectional transmission device 122 provides auxiliary driving torque in the same rotation direction, whereby the auxiliary driving torque is controlled according to the set ratio of the central controller 114, or is by the manual operating device 113 or the central controller 114 through the electrical machine driving device 115 to randomly control the auxiliary power source electrical machine 102C for adjusting the capacity of the auxiliary driving torque, wherein if the system is of open type, then the unidirectional clutch 122 can be omitted;
4) The auxiliary driving by the auxiliary power source 102C and the synthesized driving rotation speed of the primary power source 101 to the load 106 is always smaller than the driven rotation speed by the primary power source 101;
5) The corresponding reverse damping function to the rotation speed of the primary power source 101: It is by referring to the rotation speed of the primary power source and the torque difference with the output shaft 100 detected by the rotation speed and rotation torque detector device 111 as basis and the auxiliary power source electrical machine 102C is controlled through the central controller 114 to generate reverse damping, whereof the control method is the same as the aforesaid operating process for the auxiliary driving, except that the torque direction and the primary power source 101 are contrary to each other, wherein the reverse torque is generated according to the set ratio of the central controller 114 or is by the manual operating device 113 or the central controller 114 through the electrical machine driving device 115 to randomly control the capacity of the reverse torque;
6) The maximum value of the controllable reverse torque damping of the auxiliary power source electrical machine 102C: when the system is selected for reverse driven operation, the primary power source 101 becomes the reverse driven load which is reverse driven by the auxiliary power source electrical machine 102C, the rotation torque of the auxiliary power source 102C is always large or equal to the rotation torque of the primary power source 101;
7) Kinetic energy recovery function: The auxiliary power source electrical machine 102C is directly converted to perform generator function, whereby to provide power generation output for mechanical damping.

10. The apparatus according to any one of claims 1 to 4, wherein the auxiliary power source is constituted by the electrical machine 102D, whereby it is coupled with the primary power source through the planetary(or differential) wheel train, whereof its electrical machine types include the AC or DC, synchronous or asynchronous, brush or brush-less electrical machine, wherein its structural or function features include the following functions:
• A proportional auxiliary driving function: The primary power source 101, auxiliary power source electrical machine 102D and the rotational output interface 126 are respectively coupled with the sun wheel 108, planetary wheel 110 and the outer ring wheel 109 according to the relative speed ratio and function requirement, wherein the relationship between the primary power source 101 and the auxiliary power source 102D is based on the rotation speed of the primary power source detected by the cogenerating type rotation speed and rotation torque detector device 111 to control the auxiliary power source, whereby the proportional auxiliary driving between the two are achieved through the planetary or differential wheel train.

11. The apparatus according to any one of claims 1 to 4, wherein it can be further installed with the following peripheral operating devices to expand the range of applications:
• An unidirectional clutch 122 can be series installed between the primarypower source 105 and the rotation output interface 126 for limitation to unidirectional rotation torque transmission, wherein if the system is of open type, then the unidirectional clutch 122 can be omitted;
• An unidirectional clutch 122 can be further installed between the primary power source rotating shaft 105 and the casing 121, whereby the primary power source is at standstill while the auxiliary power source drives the load according to the set rotation direction, wherein if the system is of open type, the unidirectional clutch 122 can be omitted;
• The controllable clutch 123 which can be operated manually, or controlled by the mechanical, fluid or electromagnetic power is further installed between the primary power source 105 and the casing 121 to replace the unidirectional clutch 122, whereby when the clutch is released, the auxiliary speed or torque addition driving is performed between the primary power source and the auxiliary power source according to corresponding ratio, or a reverse torque damping function is generated by the auxiliary power source to the primary power source; thereof when the clutch is closed, the primary power source is locked, while the load 106 is positively or reverse driven by the auxiliary power source, or the kinetic energy of the inertia of the load 106 is recovered for power regeneration, wherein if the system is of open type, the above said unidirectional clutch 122 or the controllable clutch 123 can both be omitted, or the controllable clutch can be omitted;
• When the auxiliary power source is a double-acting rotational electrical machine 102A, the controllable clutch 123 which can be operated manually, or controlled by the mechanical, fluid or electromagnetic power can be installed in between, whereby when the controllable clutch 123 is closed, the double-acting structure is inter-locked to allow the primary power source driving the load 106 directly, wherein if the system is of open type, the controllable clutch 123 can be omitted;
• When the auxiliary power source electrical machine is 102B or 102C, then the electrical machine rotor 134 besides of direct coupling with the primary power source 101 and direct connecting with the output shaft of the rotational output interface 126 or indirect coupling through transmission components, an unidirectional clutch 122 can be further installed to match with the interactive requirement between the three, whereof the location for installing the unidirectional clutch 122 and its kinetic energy transmission directivity include: thereof if the primary power source is connected to rotational output interface 126 directly or through the transmission components, then the unidirectional clutch 122 is installed between the electrical machine rotor 134 of the auxiliary power source and any rotational component between the above said primary power source and the rotational output interface 126, wherein the clutch work rotation direction of the unidirectional clutch 122 can be selected according to the system requirement, thereof if the auxiliary power source electrical machine rotor 134 is directly or through the transmission components to connect to the rotational output interface 126, then the unidirectional clutch 122 can be installed between the primary power source 101 and any rotation component between the above said auxiliary power source 102B or 102C and the rotational output interface 126, wherein the clutch work rotation direction of the unidirectional clutch 122 can be selected according to the system requirements, wherein if the system is of open type, then the unidirectional clutch 122 can be omitted;
• When the auxiliary power source electrical machine 102D is coupled with the primary power source through the planetary or differential wheel train, then a brake 124 can be further installed on the rotation shaft of the auxiliary power source electrical machine 102D, thereby to lock up the auxiliary power source and its transmission components while allowing the primary power source directly drives the rotational output interface 126, or for the case of kinetic energy recovery, to lock up the primary power source 101 while allowing the primary power source electrical machine 102D reverse driven by the inertia of load 106 to do power regeneration and produce braking damping, wherein if the system is of open type, then the brake 124 can be omitted.

12. The apparatus according to any one of claims 1 to 4, wherein the clutches and the control systems can be selected to include part or all of the following functions:
• By referring to the rotation speed of the active power source and the torque difference with the output shaft 100 as basis, the auxiliary power source is controlled for auxiliary driving;
• By referring to the rotation speed of the primary power source and the torque difference with the output shaft 100 as basis, the auxiliary power source is operated to appear reverse torque corresponding to the primary power source for providing damping, as well as on the foundation of the above said functions or part of them to further provide the auxiliary functions or part of them including controlling the auxiliary power source for positive or reverse directional driving independently, or power regeneration or kinetic energy recovery.

## Patentansprüche

1. Kombinierte Antriebsvorrichtung, umfassend:
eine Hauptleistungsquelle (101), die eine rotierende Welle (105) für das Antreiben einer Abtriebswelle (100) über eine Vorrichtung (111) aufweist;
eine Hilfsleistungsquelle (102) zum Antreiben oder zum Bremsen der Abtriebswelle (100);
Mittel (114) zur Steuerung der Hilfsleistungsquelle (102);
**dadurch gekennzeichnet, daß** die Vorrichtung (111) einen Drehgeschwindigkeits- und Drehmomentdifferenzsensor für das Erfassen der Drehgeschwindigkeit der Abtriebswelle (100) und für das Erfassen der Drehmomentdifferenz zwischen der rotierenden Welle (105) und der Abtriebswelle (100) umfaßt; und dadurch, daß die Steuerungsmittel (114) das Drehgeschwindigkeitssignal der Abtriebswelle (100) und die Drehmomentdifferenz zwischen der rotierenden Welle (105) und der Abtriebswelle (100) als die Steuerungsbezugsbasis verwenden.

2. Vorrichtung nach Anspruch 1, **dadurch gekennzeichnet, daß** die Wechselwirkung zwischen der Hauptleistungsquelle (101), der Hilfsleistungsquelle (102) und der Abtriebswelle (100) alle oder einen Teil der folgenden Funktionen umfaßt:
• durch Bezugnahme auf das Drehgeschwindigkeitssignal der Abtriebswelle (100) und die erfaßte Drehmomentdifferenz als die Basis stellt die Hilfsleistungsquelle (102) entsprechend den proportionalen Hilfsantrieb bereit, um im Allgemeinen die Last zusammen mit der Hauptleistungsquelle (101) anzutreiben;
• die Hauptleistungsquelle (101) treibt die Last unabhängig an;
• die Hilfsleistungsquelle (102) treibt die Last unabhängig an;
• durch Bezugnahme auf das Drehgeschwindigkeitssignal der Abtriebswelle (100) und die erfaßte Drehmomentdifferenz als die Basis stellt die Hilfsleistungsquelle (102) den Leistungsregenerationseffekt oder das Gegenantreiben bereit, um eine entsprechend gegenläufige Bremsleistung zu erzeugen, um die Abtriebswelle (100) und die Last zu begrenzen;
• durch Bezugnahme auf das Drehgeschwindigkeitssignal der Abtriebswelle (100) und die erfaßte Drehmomentdifferenz als die Basis stellt die Hilfsleistungsquelle (102) den Leistungsregenerationseffekt oder des Gegenantreibens bereit, um eine gegenläufige Dämpfung über die entsprechend gegenläufige kinetische Energie zu erzeugen;
• die Abtriebswelle (100) ist unbeweglich verriegelt, um die Funktion von Position 5 unabhängig zu erfüllen.

3. Vorrichtung nach Anspruch 1 bis 2, wobei das Drehgeschwindigkeitssignal der Abtriebswelle (100) und die erfaßte Drehmomentdifferenz als die Referenz verwendet werden, um die Hilfsleistungsquelle (102) zu steuern, um den zusätzlichen Hilfsantrieb in der gleichen Richtung gemäß dem voreingestellten entsprechenden Antriebsverhältnis bereitzustellen, wovon der Hilfsantrieb umfaßt: 1) Bereitstellung des unidirektionalen oder des bidirektionalen Hilfsantriebs, wovon das Hilfsantriebsverhältnis zwischen der Hauptleistungsquelle (101) und der Hilfsleistungsquelle (102) die Drehgeschwindigkeit der Abtriebswelle (100) und die erfaßte Drehmomentdifferenz verwenden kann, um den Verhältnishilfsantrieb voreinzustellen oder um die zufällige Steuerung durch die manuelle Betätigungsvorrichtung vorzunehmen; 2) Bereitstellung des Zustandes der gegenläufigen Dämpfungsfunktion der Ausgangsträgheit, wobei die Hilfsleistungsquelle (102) durch eine manuell Betätigungsvorrichtung oder durch die Drehgeschwindigkeit der Abtriebswelle (100) und die erfaßte Drehmomentdifferenz gesteuert wird, wodurch sie mit dem Leistungsregenerationseffekt oder dem Gegenantreiben verbunden ist, um das Gegendrehmoment als die Dämpfung bereitzustellen, oder 3) Lastdämpfung der Hauptleistungsquelle (101), wobei die Hilfsleistungsquelle (102) zufällig durch eine manuelle Betätigungsvorrichtung gesteuert oder unter Verwendung der Drehgeschwindigkeit der Abtriebswelle (100) und der erfaßten Drehmomentdifferenz als Regelbasis gesteuert wird, und ferner mit dem Leistungsregenerationseffekt oder dem Gegenantreiben verbunden ist, um die Lastdämpfung zu erzeugen.

4. Vorrichtung nach jedem Anspruch 1 bis 3, wobei ihre grundlegende Ausführungsform folgendes umfaßt:
• eine Hauptleistungsquelle (101), welche eine Leistungsvorrichtung ist, die manuell oder durch elektrische Leistung oder andere mechanische Leistung angetrieben wird und Drehbewegungen ausführen kann, deren rotierende Welle (105) direkt gekoppelt oder mit einer Hilfsleistungsquelle (102) oder Last (106) über unidirektionale Vorrichtungen mit der Hilfsleistungsquelle der Last leistungsgekoppelt ist;
• einen kombinierten Drehgeschwindigkeits- und Drehmomentsensor (111), welcher ein analoger oder digitaler Drehgeschwindigkeits- und Drehmomentsensor ist, der verwendet werden kann, um die Drehgeschwindigkeit und die Richtung der Abtriebswelle (100) und die Drehmomentdifferenz zwischen der Abtriebswelle (100) und der rotierenden Welle (105) für die Regelbasis zu erfassen, wobei das zu erfassende Signal durch den elektromagnetischen Effekt oder photoelektrischen Effekt oder andere physikalische Effekte erzeugt wird, wobei das kombinierte Verfahren eine einzelne erfaßte Konstruktion enthält, um das synthetisierte Signal der Drehgeschwindigkeit und der Drehmomentdifferenz oder das Synthetisieren der getrennten Signale von den zwei einzelnen erfaßten Konstruktionen zu erzeugen;
• einen zusätzlichen Geschwindigkeitssensor (112), welcher ein analoger oder digitaler Geschwindigkeitssensor ist, der eingebaut wird, um die Drehgeschwindigkeit der Hilfsleistungsquelle oder der Abtriebswelle zu erfassen und dieses Signal auf einen zentralen Controller (114) zu geben, um die Geschwindigkeitsbegrenzung oder eine andere Rückkopplung des Steuersignals der Abtriebsgeschwindigkeit bereitzustellen, weswegen sie für ein offenes System weggelassen werden kann;
• die mechanische Konstruktion, welche die relative ausgelöste Translation aufgrund der Drehmomentdifferenz zwischen der rotierenden Welle (105) der oben genannten Hauptleistungsquelle (101) und der Abtriebswelle (100) erzeugt, während der Transmissionszustand zwischen ihnen aufrechterhalten wird, wobei sie die im Allgemeinen verwendeten axialen oder radialen bidirektionalen Translationsvorrichtungen umfaßt, einschließlich der bidirektional wirkenden Schraubenanordnung oder der bidirektional wirkenden inneren schraubenförmigen oder äußeren schraubenförmigen kopflosen Schraubenanordnung, oder der bidirektional wirkenden axialen Kegelfläche oder Kegelgetriebekopplungsvorrichtung, oder der Sensorkonstruktion, welche die bidirektionale Translation oder rotierende Winkeltranslation in elektrische Leistung umwandeln kann, wobei sie die Wechselstrom- oder Gleichstrom-, bürstenhaltige oder bürstenlose oder induktionsförmige Konstruktion umfaßt, die durch den analogen oder digitalen photoelektrischen Effekt oder elektromagnetischen Effekt oder andere physikalische Effekte gebildet wird, wodurch ein relatives Leistungssignal in linearem oder nichtlinearem, positivem oder umgekehrtem Verhältnis durch die relative Drehbewegung erzeugt wird, und sich das Leistungssignalverhältnis aufgrund der axialen relativen Kopplungsposition in linearer oder nichtlinearer positiver oder umgekehrter Proportionalabweichung ändert;
• eine Abtriebswelle (100), welche zwischen der Abtriebsseite und dem Drehgeschwindigkeits- und Drehmomentsensor (111) für das Übertragen der kinetischen Rotationsenergie eingebaut ist;
• eine manuelle Betätigungsvorrichtung (113), welche eine Eingangssteuervorrichtung ist, die elektromechanische Bauteile oder elektronische Halbleiterelemente sowie die relevanten Schnittstellen der Steuervorrichtung umfaßt, wobei sie manuell betätigt werden kann, um das digitale oder analoge elektrische Leistungssignal zu erzeugen oder um Eingangssignale von anderen elektrischen Leistungssignalschnittstellen für das Übertragen an den zentralen Controller (114) und für die weitere Steuerung der Arbeitsleistung der Hilfsleistungsquelle zu empfangen, um das proportionale zusätzliche Antreiben oder proportionale umgekehrte Dämpfen bereitzustellen;
• Steuerungsmittel (114), welche eine analoge oder digitale elektrische Schaltungsvorrichtung sind, die elektromechanische Bauteile oder elektronische Halbleiterbauelemente oder Mikroprozessoren umfaßt, wobei sie den kombinierten Drehgeschwindigkeits- und Drehmomentsensor (111) betreffen, der von der Hauptleistungsquelle (101) und den zufälligen Befehlen von der manuellen Betätigungsvorrichtung (113) angesteuert wird, um die elektrische Antriebsvorrichtung (115) zu steuern und ferner die Hilfsleistungsquelle (102) für den Motorfunktionsbetrieb oder den Funktionsbetrieb der Leistungsregeneration anzusteuern; in dieser Hinsicht können der Betrieb zwischen der Hauptleistungsquelle (101), der Hilfsleistungsquelle (102) und der Abtriebswelle (100) entweder linear oder nichtlinear proportionale Hilfsantriebsfunktionen oder proportionale Dämpfungsfunktionen sein, wie gefordert, und das System kann eine geschlossene ringförmige, offene ringförmige oder halboffenene ringförmige Konstruktion sein;
• eine Antriebsvorrichtung (115) der elektrischen Maschine, welche eine elektromechanische Vorrichtung oder elektronische Halbleitervorrichtung umfaßt, wobei sie durch die Steuerung der Steuerungsmittel (114) oder durch die manuelle Betätigungsvorrichtung (113) betätigt wird, um die Eingangs-/Ausgangsleistung und die Drehrichtungen der Hilfsleistungsquelle (102) zu steuern;
• eine Hilfsleistungsquelle (102), welche eine rotierende elektrische Maschine ist, die Motorfunktionen aufweist oder ferner die Generatorfunktionen aufweist, deren Ausführungsformen eine doppeltwirkende rotierende elektrische Maschine (102A) oder eine Kombination statischer und rotierender elektrischer Maschinen (102C, 102C) oder (102D) umfassen, wobei die Kopplungsverfahren der verschiedenen Ausführungsformen mit der Hauptleistungsquelle (101) verschiedene Arbeitsfunktionen ausweisen;
• eine Stromversorgung (116), welche die erforderliche Versorgungsleistung für die Hilfsleistungsquelle, den zentralen Controller, die Antriebsvorrichtung der elektrischen Maschine, die Eingabebetätigungsvorrichtung und die peripheren Steuervorrichtungen bereitstellt oder um ferner die Regenerationsleistung von der Hilfsleistungsquelle zu reservieren;
• eine Last (106), welche durch die rotierende oder lineare translatorische Vorrichtung gebildet wird, die die rotierende aufgewandte Leistung aufnimmt.

5. Vorrichtung nach jedem Anspruch 1 bis 4, wobei sie folgendes umfaßt:
• eine rotierende Welle (105) der Hauptleistungsquelle, welche durch die kinetische Rotationsenergie der Hauptleistungsquelle (101) angetrieben wird, wobei eine wechselwirkende Schraubenanordnung (201) zwischen der rotierenden Welle (105) der Hauptleistungsquelle und der Wellenbohrung des axial verschiebbaren Rotors (211) des kombinierten Drehgeschwindigkeits- und Drehmomentsensors bereitgestellt wird, wobei die wechselwirkende Schraubenanordnung (201 ) eine Zahngewindeschraube oder eine zahnlose Schraube mit gewalztem Gewinde umfaßt, wobei der Gewindewinkel bidirektional wechselwirkend sein kann, d.h. die rotierende Welle (105) der Hauptleistungsquelle kann gedreht werden, damit der axial verschiebbare Rotor (211) axial verschoben werden kann, oder der axial verschiebbare Rotor (211) unter Druck die rotierende Welle (105) der Hauptleistungsquelle gegenläufig antreiben kann, um sich zu drehen, oder der axial verschiebbare Rotor (211) durch sich selbst gedreht werden kann; eine Zwischenwellenanordnung für die axiale translatorische oder rotierende Transmission oder eine andere Verriegelungskeilvorrichtung (215) für die axiale gleitende und rotierende Transmission wird zwischen dem axial verschiebbaren Rotor (211) und der Abtriebswelle (100) für das Antreiben der Abtriebsseite bereitgestellt, um so die relative axiale Übersetzung zwischen ihnen zu erlauben, während der Transmissionszustand aufrechterhalten wird;
• eine vorgespannte Feder (202), die zwischen der rotierenden Welle (105) der Hauptleistungsquelle selbst und der Hauptleistungsquelle (101) eingebaut ist, wodurch der axial verschiebbare Rotor (211) vorgespannt wird, wodurch die relative axiale Translation gemäß der Richtung und der Intensität des Transmissionsdrehmomentes während der rotierenden Leistungsübertragung zwischen der rotierenden Welle (105) der Hauptleistungsquelle und dem axial verschiebbaren Rotor (211) erzeugt wird, wobei der axial verschiebbare Rotor (211) entsprechend mit der statischen Anordnung gekoppelt wird, die auf dem Gehäuse (121) befestigt ist, wodurch das elektrische Leistungssignal des Sensors während der Rotationswechselwirkung erzeugt wird, wobei die Intensität des elektrischen leistungserfassenden Signals durch die relative Drehgeschwindigkeit und die axialen Kopplungspositionen zwischen dem axial verschiebbaren Rotor (211) und der statischen Anordnung bestimmt wird, wobei die Drehgeschwindigkeit durch die absolute Drehgeschwindigkeit zwischen der Hauptleistungsquelle (101) und dem Gehäuse (121) bestimmt wird und die axialen relativen Positionen durch die Drehmomentdifferenz zwischen der aktiven Leistungsquelle (101) und der Abtriebswelle (100) bestimmt werden, wodurch die axiale rotierende Translation durch den axial verschiebbaren Rotor (211) erzeugt wird und die vorgespannte Feder (202) außerdem den axialen Kopplungszustand zwischen dem axial verschiebbaren Rotor (211) und der statischen Anordnung verändert;
• den kombinierten Drehgeschwindigkeits- und Drehmomentsensor (111), der durch den oben genannten axialen verschiebbaren Rotor (211) und die statische Konstruktion gebildet wird, wobei die statische Konstruktion den magnetisch leitenden Eisenkern (213) und die Wicklung (212) des elektrischen Leistungssensors umfassen kann und der axial verschiebbare Rotor (211) eine Konstruktion umfassen kann, die einen Magnetpol (216) und eine Wellenbohrung, die mit der Schraube wechselwirkt, aufweisen kann, wobei die Konstruktion zwischen der statischen Anordnung und dem axial verschiebbaren Rotor durch eine zylindrische oder schräge Kegelkonstruktion gebildet wird;
• den kombinierten Drehgeschwindigkeits- und Drehmomentsensor (111), der durch den oben genannten axial verschiebbaren Rotor (211) und die statische Konstruktion gebildet wird, wobei das Drehmoment Null ist, sein Ausgangssignal entweder Null sein kann, oder als größer oder kleiner Null eingestellt werden;
• den kombinierten Drehgeschwindigkeits- und Drehmomentsensor (111), der durch den oben genannten axial verschiebbaren Rotor (211) und die statische Konstruktion gebildet wird, wenn die Drehgeschwindigkeit Null ist, wobei sein Ausgangssignal entweder Null sein kann, oder anders eingestellt werden kann, um größer als oder kleiner als Null zu sein;
• das durch den kombinierten Drehgeschwindigkeits- und Drehmomentsensor (111) erfaßte Signal kann ein analoges oder ein digitales Signal sein, wobei das analoge Signal mit der analogen Operationsverstärkerschaltung für den Signalvergleich oder die Signalsynthese verbunden sein kann, wodurch es vom zentralen Controller (114) zur weiteren Steuerung der Antriebsvorrichtung (115) der elektrischen Maschine verarbeitet werden kann, um die relative Leistungsansteuerung der Hilfsleistungsquelle (102) bereitzustellen und ihre größte Leistung zu begrenzen, wobei für diesen Fall das digitale Signal vom zentralen Controller (114) zur weiteren Steuerung der Antriebsvorrichtung (115) der elektrischen Maschine verarbeitet wird, um die relative Steuerung an der Hilfsleistungsquelle (102) bereitzustellen und ihre größte Leistung zu begrenzen;
• die mechanische Konstruktion, welche die relative ausgelöste Translation aufgrund der Drehmomentdifferenz zwischen der rotierenden Welle (105) der oben genannten Hauptleistungsquelle (101) und der Abtriebswelle (101) erzeugt, während der Transmissionszustand zwischen ihnen aufrechterhalten wird, wobei sie die im Allgemeinen verwendeten axialen oder radialen bidirektionalen Translationsvorrichtungen umfaßt, einschließlich der bidirektional wirkenden Schraubenanordnung oder der bidirektional wirkenden inneren schraubenförmigen oder äußeren schraubenförmigen kopflosen Schraubenanordnung, oder der bidirektional wirkenden axialen Kegelfläche oder Kegelgetriebekopplungsvorrichtung, oder der Sensorkonstruktion, welche die bidirektionale Translation oder rotierende Winkeltranslation in elektrische Leistung umwandeln kann, wobei sie die Wechselstrom- oder Gleichstrom-, bürstenhaltige oder bürstenlose oder induktionsförmige Konstruktion umfaßt, die durch den analogen oder digitalen photoelektrischen Effekt oder elektromagnetischen Effekt oder andere physikalische Effekte gebildet wird, wodurch ein relatives Leistungssignal in linearem oder nichtlinearem, positivem oder umgekehrtem Verhältnis durch die relative Drehbewegung erzeugt wird und sich das Leistungssignalverhältnis aufgrund der axialen relativen Kopplungsposition in linearer oder nichtlinearer positiver oder umgekehrter Proportionalabweichung ändert;
• eine Abtriebswelle (100), welche durch die kinetische Rotationsenergie der Hauptleistungsquelle (101) über den axial verschiebbaren Rotor (211) angetrieben wird und durch die kinetische Rotationsenergie der Hilfsleistungsquelle (102) angetrieben wird, wobei die rotierenden Verfahren mit der Hilfsleistungsquelle (102) die indirekte Antriebsvorrichtung über die Transmissionskomponenten zur Kopplung mit der Hilfsleistungsquelle (102) oder zur direkten Kopplung zwischen der Abtriebswelle (100) und dem Rotor der Hilfsleistungsquelle (102) umfassen, wobei die Verfahren ihrer Kopplung mit der Last die direkte Kopplung mit der Last oder über Transmissionsvorrichtungen wie Getriebe, Kettenrad und Gestänge umfassen, um die Last anzutreiben.

6. Vorrichtung nach jedem der Ansprüche 1 bis 4, wobei ihre Hauptanordnung **dadurch gekennzeichnet ist, daß** sie einen axial verschiebbaren Rotor (311) und die statische Konstruktion für das Erfassen der Drehmomentdifferenz zwischen der rotierenden Welle (105) der aktiven Leistungsquelle und der Abtriebswelle (100) umfaßt, um die axiale Translation zu erzeugen und ferner das relative Leistungssignal, sowie einen anderen Sensor eines Antriebsdrehgeschwindigkeitssensors (300) bereitzustellen, der zwischen der rotierenden Welle (105) der aktiven Leistungsquelle und dem Gehäuse (121) eingebaut ist, wobei der kombinierte Drehgeschwindigkeits- und Drehmomentsensor (111) im Allgemeinen durch die oben erwähnten zwei Vorrichtungen gebildet wird und hauptsächlich folgendes umfaßt:
• eine rotierende Welle (105) der Hauptleistungsquelle, welche durch die kinetische Rotationsenergie der Hauptleistungsquelle (101) angetrieben wird, wobei eine wechselwirkende Schraubenanordnung (201) zwischen der rotierenden Welle (105) der Hauptleistungsquelle und der Wellenbohrung des axial verschiebbaren Rotors (311) des kombinierten Drehgeschwindigkeits- und Drehmomentsensors bereitgestellt wird, wobei die wechselwirkende Schraubenanordnung (201) eine Zahngewindeschraube oder eine zahnlose Schraube mit gewalztem Gewinde umfaßt, wobei der Gewindewinkel bidirektional wechselwirkend sein kann, d.h. die rotierende Welle (105) der Hauptleistungsquelle kann gedreht werden, damit der axial verschiebbare Rotor (311) axial verschoben werden kann oder der axial verschiebbare Rotor (311) unter Druck die rotierende Welle (105) der Hauptleistungsquelle gegenläufig antreiben kann, um sich zu drehen, oder der axial verschiebbare Rotor (311) durch sich selbst gedreht werden kann; eine Zwischenwellenanordnung für die axiale translatorische oder rotierende Transmission oder eine andere Verriegelungskeilvorrichtung (215) für die axiale gleitende und rotierende Transmission wird zwischen dem axial verschiebbaren Rotor (311) und der Abtriebswelle (100) für das Antreiben der Abtriebsseite bereitgestellt, um so die relative axiale Translation zwischen ihnen zu erlauben, während der Transmissionszustand aufrechterhalten wird;
• eine vorgespannte Feder (202), die zwischen der rotierenden Welle (105) der Hauptleistungsquelle selbst und der Hauptleistungsquelle (101) eingebaut ist, wodurch der axial verschiebbare Rotor (311) vorgespannt wird, wodurch die relative axiale Translation gemäß der Richtung und der Intensität des Transmissionsdrehmomentes während der rotierenden Leistungsübertragung zwischen der rotierenden Welle (105) der Hauptleistungsquelle und dem axial verschiebbaren Rotor (311) erzeugt wird, wobei der axial verschiebbare Rotor (311) entsprechend mit der statischen Konstruktion gekoppelt wird, die auf dem Gehäuse (121) befestigt ist, wodurch das elektrische Leistungssignal des Sensors während der Rotationswechselwirkung erzeugt wird, wobei die Intensität des elektrischen leistungserfassenden Signals durch die axiale relative Kopplungsposition zwischen dem axial verschiebbaren Rotor (311) und der statischen Konstruktion bestimmt wird, wobei die axiale relative Position durch die Drehmomentdifferenz zwischen der Hauptleistungsquelle (101) und der Abtriebswelle (100) bestimmt wird, wodurch die axiale rotierende Translation durch den axial verschiebbaren Rotor (311) erzeugt wird und die vorgespannte Feder (202) außerdem den axialen Kopplungszustand zwischen dem axial verschiebbaren Rotor (311) und der statischen Anordnung ändert, und der Antriebsgeschwindigkeitssensor (300) zwischen der Hauptleistungsquelle (101) und dem Gehäuse (121) zum Erfassen der absoluten Drehgeschwindigkeit zwischen beiden eingebaut ist;
• den kombinierten Drehgeschwindigkeits- und Drehmomentsensor (111), der durch den oben genannten axialen verschiebbaren Rotor (311) und die statische Konstruktion gebildet wird, wobei die statische Konstruktion den magnetisch leitenden Eisenkern (313), die erste Wicklung (310) als die Eingangswechselstromsignalquelle und die zweite Wicklung (312) zum Bereitstellen des translationserfassenden Leistungssignals umfassen kann und der axial verschiebbare Rotor (311) eine Konstruktion umfassen kann, die einen magnetisch leitenden Eisenkern (313) und eine Wellenbohrungsanordnung mit wechselwirkender Schraube aufweisen kann;
• für den kombinierten Drehgeschwindigkeits- und Drehmomentsensor (111), der durch den oben genannten axial verschiebbaren Rotor (311) und die statische Konstruktion gebildet wird, kann ohne Rücksicht auf die relative Position des axial verschiebbaren Rotors, wenn das Drehmoment Null ist, sein Ausgangssignal entweder Null sein, oder als größer oder kleiner Null eingestellt werden;
• das Ausgangssignal kann Null sein, wenn die Drehgeschwindigkeit des oben erwähnten Antriebsgeschwindigkeitssensors (300) Null ist;
• das oben erwähnte Drehmomentdifferenzsignal und das absolute Drehgeschwindigkeitssignal können entweder ein analoges oder ein digitales Signal sein, wobei das analoge Signal durch die analoge Operationsverstärkerschaltung synthetisiert werden kann, wodurch es vom zentralen Controller (114) zur weiteren Steuerung der Antriebsvorrichtung (115) der elektrischen Maschine verarbeitet werden kann, um relative die Leistungsansteuerung von der Hilfsleistungsquelle (102) bereitzustellen und ihre größte Leistung zu begrenzen, wobei das Signal für den Fall des digitalen Signals durch den zentralen Controller (114) zur weiteren Steuerung der Antriebsvorrichtung (115) der elektrischen Maschine verarbeitet wird, um die relative Steuerung an der Hilfsleistungsquelle (102) bereitzustellen und ihre größte Leistung zu begrenzen;
• die mechanische Konstruktion, welche die relative ausgelöste Translation aufgrund der Drehmomentdifferenz zwischen der rotierenden Welle (105) der oben genannten Hauptleistungsquelle (101) und der Abtriebswelle (101) erzeugt, während der Transmissionszustand zwischen ihnen aufrechterhalten wird, wobei sie die im Allgemeinen verwendeten axialen oder radialen bidirektionalen Translationsvorrichtungen umfaßt, einschließlich der bidirektional wirkenden Schraubenanordnung oder der bidirektional wirkenden inneren schraubenförmigen oder äußeren schraubenförmigen kopflosen Schraubenanordnung, oder der bidirektional wirkenden axialen Kegelfläche oder Kegelgetriebekopplungsvorrichtung, oder der Sensorkonstruktion, welche die bidirektionale Translation oder rotierende Winkeltranslation in elektrische Leistung umwandeln kann, wobei sie die Wechselstrom- oder Gleichstrom-, bürstenhaltige oder bürstenlose oder induktionsförmige Konstruktion umfaßt, die durch den analogen oder digitalen photoelektrischen Effekt oder elektromagnetischen Effekt oder andere physikalische Effekte gebildet wird, wodurch ein relatives Leistungssignal in linearem oder nichtlinearem, positivem oder umgekehrtem Verhältnis durch die relative Drehbewegung erzeugt wird und sich das Leistungssignalverhältnis aufgrund der axialen relativen Kopplungsposition in linearer oder nichtlinearer positiver oder umgekehrter Proportionalabweichung ändert;
• eine Abtriebswelle (100), welche durch die kinetische Rotationsenergie der Hauptleistungsquelle (101) über den axial verschiebbaren Rotor (311) angetrieben wird und durch die kinetische Rotationsenergie der Hilfsleistungsquelle (102) angetrieben wird, wobei die rotierenden Verfahren mit der Hilfsleistungsquelle (102) die indirekte Antriebsvorrichtung über die Transmissionskomponenten zur Kopplung mit der Hilfsleistungsquelle (102) oder zur direkten Kopplung zwischen der Abtriebswelle (100) und dem Rotor der Hilfsleistungsquelle (102) umfassen, wobei die Verfahren ihrer Kopplung mit der Last die direkte Kopplung mit der Last oder über Transmissionsvorrichtungen wie Getriebe, Kettenrad und Gestänge umfassen, um die Last anzutreiben.

7. Vorrichtung nach jedem Anspruch 1 bis 4, wobei die Hilfsleistungsquelle eine doppeltwirkende rotierende elektrische Maschine (102A) ist, welche den ersten wechselwirkenden Rotor (103) und den zweiten wechselwirkenden Rotor (104) umfaßt, wobei sie gemeinsam angetrieben werden und durch das Magnetfeld und Rotoren gebildet werden, wobei deren Anordnung zylinderförmig, becherförmig, scheibenförmig oder kegelförmig sein kann und ihre elektrische Maschinenkonstruktion und ihre Arbeitsausführungsformen umfassen: Gleichstrom- oder Wechselstrom-, synchrone oder asynchrone, bürstenhaltige oder bürstenlose Ausführungsformen rotierender elektrischer Maschinen, wobei sie **dadurch gekennzeichnet sind, daß** der erste wechselwirkende Rotor (103) mit dem kombinierten Drehgeschwindigkeits- und Drehmomentsensor (111) über die Abtriebswelle (100) gekoppelt wird und ferner mit der rotierenden Welle (105) der Hauptleistungsquelle gekoppelt wird, während der zweite wechselwirkende Rotor (104) direkt oder über Transmissionskomponenten gekoppelt ist, um die Drehausgangsschnittstelle (126) anzusteuern; wobei eine Kupplung (122) mit einer Drehrichtung zwischen der rotierenden Welle (105) der Hauptleistungsquelle und dem Gehäuse (121), wie gefordert, für das Auswählen einer Richtung, um das Antreiben in umgekehrter Richtung zu verhindern, eingebaut wird, und die Kupplung mit einer Drehrichtung weggelassen werden kann, wenn diese Funktion gestrichen wird, und daher ist für die oben erwähnten Ausführungsformen des ersten wechselwirkenden Rotors (103) und des zweiten wechselwirkenden Rotors (104) einer davon in der Feldkonstruktion der elektrischen Maschine, wobei beide oder einer davon ferner mit zusätzlichem leitenden Ring (107), leitender Bürste (117) und einem Bürstensitz eingebaut werden können, um mit den doppeltwirkenden Ausführungsformen übereinzustimmen und um die Leistung während des doppeltwirkenden Antreibens zu übertragen, wobei ihre Konstruktions- und Funktionsmerkmale ausgewählt werden können, um eine oder mehrere der folgenden Funktionen gleichzeitig zu umfassen:
1) Zusätzliche Hilfsantriebsfunktion für Geschwindigkeitszugabe durch Steuern des Drehzahlverhältnisses: der erste wechselwirkende Rotor (103) wird über die Abtriebswelle (100) mit dem kombinierten Drehgeschwindigkeits- und Drehmomentsensor (111) gekoppelt und wird ferner mit der Hauptleistungsquelle (101) gekoppelt, während der zweite wechselwirkende Rotor (104) mit der Drehausgangsschnittstelle (126) verbunden wird;
2) Eine Umkehrdämpfungsfunktion, die der Hauptleistungsquelle entspricht: der zweite wechselwirkende Rotor (104) ist im Stillstand, während der erste wechselwirkende Rotor (103) das Gegendrehmoment entgegengesetzt der Arbeitsrichtung der Hauptleistungsquelle bereitstellt, wobei das Gegendrehmoment kleiner als das Drehmoment der Hauptleistungsquelle (101) und in Gegenrichtung der Hauptleistungsquelle sein kann;
3) Rückgewinnung der kinetischen Energie der Trägheit der Last (106) oder Bereitstellen der Dämpfungsfunktion für die rückübertragene Leistung der Last (106): der erste wechselwirkende Rotor (103) ist im Stillstand und der zweite wechselwirkende Rotor (104) stellt die Regenerationsfunktion und die weitere Erzeugungsdämpfung bereit.

8. Vorrichtung nach jedem Anspruch 1 bis 4, wobei sie durch die Hauptleistungsquelle und die Hilfsleistungsquelle gebildet wird, die auf der gemeinsamen Welle befestigt ist, wobei das statische Gehäuse (133) der Hilfsleistungsquelle (102B) feststehend ist, während der Rotor (134) die Last (106) antreibt, wobei die Ausführungsformen der elektrischen Maschine Wechselstrom- oder Gleichstrom-, synchrone oder asynchrone, bürstenhaltige oder bürstenlose elektrische Maschinen umfassen, wobei ihre Ausführungsform und Konstruktionsmerkmale ausgewählt werden können, um einen Teil oder alle der folgenden Funktionen zu umfassen:
1) Die Hauptleistungsquelle (105) kommt durch die Kupplung (122) mit einer Drehrichtung und die Drehausgangsschnittstelle (126) der elektrischen Maschine (102B) in der koaxialen Konstruktion vor, um die Last (106) anzutreiben, wobei, wenn das System ein offenes ist, dann die Kupplung (122) mit einer Drehrichtung weggelassen werden kann;
2) Der kombinierte Drehgeschwindigkeits- und Drehmomentsensor (111) wird zwischen der rotierenden Welle (105) der Hauptleistungsquelle oder ihrer angetriebenen Drehkonstruktion und der statischen Konstruktion eingebaut, wodurch er zum Erfassen der Drehgeschwindigkeit der Hauptleistungsquelle (101) und ihrer Drehmomentdifferenz mit der Abtriebswelle (100) für die Bezugsbasis der Systembetriebssteuerung verwendet wird;
3) Die Drehmomentdifferenz zwischen der Hauptleistungsquelle und der Abtriebswelle (100), die von dem kombinierten Drehgeschwindigkeits- und Drehmomentsensor erfaßt ist, wird für die proportionale zusätzliche Antriebsfunktion verwendet: Die Hauptleistungsquelle dreht sich, um den kombinierten Drehgeschwindigkeits- und Drehmomentsensor (111) anzutreiben und ferner das entsprechende Signal für den zentralen Controller (114) zu erzeugen, während, wenn das Drehgeschwindigkeitssignal den Einstellwert überschreitet, die elektrische Maschine (102B) der Hilfsleistungsquelle von der Antriebsvorrichtung (105) der elektrischen Maschine angetrieben wird, um das zusätzliche Antriebsdrehmoment in der gleichen Richtung mit der rotierenden Welle der Hauptleistungsquelle zu erzeugen, und das zusätzliche Antriebsdrehmoment wird gemäß dem Einstellverhältnis des zentralen Controllers (114) gesteuert oder das zusätzliche Antriebsdrehmoment wird durch die manuelle Betätigungsvorrichtung (113), den zentralen Controller (114) und die zufällige Steuerung der Antriebsvorrichtung (115) der elektrischen Maschine an der elektrischen Maschine (102B) der Hilfsleistungsquelle bestimmt;
4) Die Drehgeschwindigkeit des zusätzlichen Antreibens der elektrischen Maschine (102B) der Hilfsleistungsquelle und des synthetisierten Antreibens der Hauptleistungsquelle (101) für die Last (106) ist immer kleiner als die angetriebene Drehgeschwindigkeit durch die Hauptleistungsquelle (101);
5) Die entsprechende Umkehrdämpfungsfunktion für die Drehgeschwindigkeit der aktiven Leistungsquelle (101): Sie wird durch Bezugnahme auf die Drehgeschwindigkeit der Hauptleistungsquelle und die Drehmomentdifferenz mit der Abtriebswelle (100) vom Drehgeschwindigkeits- und Drehmomentsensor (111) als Basis erfaßt und die elektrische Maschine (102B) der Hilfsleistungsquelle wird durch den zentralen Controller (114) gesteuert, um die Umkehrdämpfung zu erzeugen, deren Steuerverfahren das gleiche wie für das oben erwähnte Arbeitsverfahren für das zusätzliche Antreiben ist, abgesehen davon, daß die Drehmomentrichtung und die Hauptleistungsquelle (101) einander entgegengesetzt sind, wobei das Gegendrehmoment gemäß dem eingestellten Verhältnis des zentralen Controllers (114) erzeugt wird oder durch die manuelle Betätigungsvorrichtung (113) oder den zentralen Controller (114) mit der Antriebsvorrichtung (115) der elektrischen Maschine verbunden ist, um zufällig die elektrische Maschine (102B) der Hilfsleistungsquelle für das Abgleichen der Leistung des Gegendrehmomentes zu steuern;
6) Der maximale Wert der regelbaren Gegendrehmomentdämpfung der elektrischen Maschine (102B) der Hilfsleistungsquelle ist immer kleiner als das Antriebsdrehmoment der Hauptleistungsquelle (101) an der elektrischen Maschine (102B) der Hilfsleistungsquelle, oder, wenn das System für den gegenläufigen Antriebsbetrieb ausgewählt wird, wird die Hauptleistungsquelle (101) gegenläufig durch die elektrische Maschine der Hilfsleistungsquelle angetrieben, und während die Hauptleistungsquelle (101) zur gegenläufig angetrieben Last wird, ist das Drehmoment der elektrischen Maschine (102B) der Hilfsleistungsquelle immer größer als oder gleich dem Drehmoment der Hauptleistungsquelle (101);
7) Funktion zur Rückgewinnung der kinetischen Energie: Die elektrische Maschine (102B) der Hilfsleistungsquelle wird direkt umgerichtet, um die Generatorfunktion durchzuführen, um so die Abgabe der erzeugten Leistung für das mechanische Dämpfen bereitzustellen.

9. Vorrichtung nach jedem Anspruch 1 bis 4, wobei sie die elektrischen Maschinen und den Planeten- oder Differentialradzug umfaßt, wobei die Hilfsleistungsquelle des Systems durch die elektrische Maschine (102C) gebildet wird, deren statisches Gehäuse (133) der elektrischen Maschine feststehend ist, während die Last (106) durch den Rotor (134) angetrieben wird, wobei die elektrischen Maschinenarten die Wechselstrom- oder Gleichstrom-, synchrone oder asynchrone, bürstenhaltige oder bürstenlose elektrische Maschine umfassen, wobei ihre Konstruktions- und Funktionsmerkmale ausgewählt werden können, um eine oder mehrere der folgenden Funktionen gleichzeitig zu umfassen:
1) Die rotierende Welle (105) der Hauptleistungsquelle wird koaxial mit der elektrischen Maschine (102C) eingebaut, wodurch sie mit der Kupplung (122) mit einer Drehrichtung verbunden wird, um mit dem Abtriebsschwenkarm (118) zu koppeln, der durch das Planetenrad (110) zum Verbinden mit der Drehausgangsschnittstelle (126) angetrieben wird, wobei die rotierende Welle des Rotors (134) mit dem Sonnenrad (108) und der äußeren Ringscheibe (109) des Statorgehäuses (133) der elektrischen Maschine verbunden ist, um mit dem planetenförmigen Diffenrentilradzug zur Verbindung mit der Drehausgangsschnittstelle (126) zu koppeln, wobei, wenn das System ein offenes ist, dann die Kupplung (122) mit einer Drehrichtung weggelassen werden kann;
2) Der kombinierte Drehgeschwindigkeits- und Drehmomentsensor (111) wird zwischen der rotierenden Welle (105) der Hauptleistungsquelle oder ihrer angetriebenen Drehkonstruktion und der statischen Konstruktion eingebaut, um die Drehgeschwindigkeit der Hauptleistungsquelle (101) und die Drehmomentdifferenz mit der Abtriebswelle (100) für die Steuerungsgrundlage des Systembetriebs zu erfassen;
3) Die proportionale zusätzliche Antriebsfunktion gemäß der Drehgeschwindigkeit der Hauptleistungsquelle: Der kombinierte Drehgeschwindigkeits- und Drehmomentsensor (111) wird durch die Rotation der Hauptleistungsquelle (101) angetrieben, um das entsprechende Signal zu erzeugen und um das Signal an den zentralen Controller (114) zu übertragen, wenn das Rotationssignal den Einstellwert überschreitet, wobei die elektrische Maschine (102C) der Hilfsleistungsquelle, die durch die elektrische Maschine angetrieben wird, die die Vorrichtung (115) zusammen mit dem Schwenkarm (118) antreibt, der durch das Planetenrad (110) des Planetenradzuges angetrieben wird, der durch die rotierende Welle der aktiven Leistungsquelle über die Transmissionsvorrichtung (122) mit einer Drehrichtung angetrieben wird, das zusätzliche Antriebsdrehmoment in der gleichen Drehrichtung bereitstellt, wodurch das zusätzliche Antriebsdrehmoment gemäß dem eingestellten Verhältnis des zentralen Controllers ( 114) gesteuert wird oder durch die manuelle Betätigungsvorrichtung (113) oder den zentralen Controller (114) mit der Antriebsvorrichtung (115) der elektrischen Maschine verbunden wird, um zufällig die elektrische Maschine (102C) der Hilfsleistungsquelle für das Abgleichen der Leistung des zusätzlichen Antriebsdrehmomentes zu steuern, wobei, wenn das System ein offenes ist, dann die Kupplung (122) mit einer Drehrichtung weggelassen werden kann;
4) Das zusätzliche Antreiben durch die Hilfsleistungsquelle (102C) und die synthetisierte Antriebsdrehgeschwindigkeit der Hauptleistungsquelle (101) für die Last (106) ist immer kleiner als die angetriebene Drehgeschwindigkeit durch die Hauptleistungsquelle (101);
5) Die entsprechende Umkehrdämpfungsfunktion für die Drehgeschwindigkeit der Hauptleistungsquelle (101): Sie wird durch Bezugnahme auf die Drehgeschwindigkeit der Hauptleistungsquelle und die Drehmomentdifferenz mit der Abtriebswelle (100) vom Drehgeschwindigkeits- und Drehmomentsensor (111) als Basis erfaßt und die elektrische Maschine (102C) der Hilfsleistungsquelle wird durch den zentralen Controller (114) gesteuert, um die Umkehrdämpfung zu erzeugen, deren Steuerungsverfahren das gleiche wie für das oben erwähnte Arbeitsverfahren für das zusätzliche Antreiben ist, abgesehen davon, daß die Drehmomentrichtung und die Hauptleistungsquelle (101) einander entgegengesetzt sind, wobei das Gegendrehmoment gemäß dem eingestellten Verhältnis des zentralen Controllers (114) erzeugt wird oder durch die manuelle Betätigungsvorrichtung (113) oder den zentralen Controller (114) mit der Antriebsvorrichtung (115) der elektrischen Maschine verbunden ist, um zufällig die Leistung des Gegendrehmomentes zu steuern;
6) Der maximale Wert der regelbaren Gegendrehmomentdämpfung der elektrischen Maschine (102C) der Hilfsleistungsquelle: wenn das System für den gegenläufigen Antriebsbetrieb ausgewählt wird, wird die Hauptleistungsquelle (101) zur gegenläufig angetriebenen Last, welche gegenläufig durch die elektrische Maschine (102C) der Hilfsleistungsquelle angetrieben wird, wobei das Drehmoment der Hilfsleistungsquelle (102C) immer größer als oder gleich dem Drehmoment der Hauptleistungsquelle (101) ist;
7) Funktion zur Rückgewinnung der kinetischen Energie: Die elektrische Maschine (102C) der Hilfsleistungsquelle wird direkt umgerichtet, um die Generatorfunktion durchzuführen, um so die Abgabe der erzeugten Leistung für das mechanische Dämpfen bereitzustellen.

10. Vorrichtung nach jedem Anspruch 1 bis 4, wobei die Hilfsleistungsquelle durch die elektrische Maschine (102D) gebildet wird, wodurch sie mit der Hauptleistungsquelle über den Planetenradzug (oder Differentialradzug) gekoppelt wird, wobei die elektrischen Maschinenarten die Wechselstrom- oder Gleichstrom-, synchrone oder asynchrone, bürstenhaltige oder bürstenlose elektrische Maschine enthalten, wobei ihre Konstruktions- und Funktionsmerkmale die folgenden Funktionen umfassen:
• Eine proportionale zusätzliche Antriebsfunktion: Die Hauptleistungsquelle (101), die elektrische Maschine (102D) der Hilfsleistungsquelle und die Drehausgangsschnittstelle (126) sind entsprechend mit dem Sonnenrad (108), dem Planetenrad (110) und der äußeren Ringscheibe (109) gemäß dem relativen Geschwindigkeitsverhältnis und der Funktionsanforderung gekoppelt, wobei die Beziehung zwischen der Hauptleistungsquelle (101) und der Hilfsleistungsquelle (102D) auf der Drehgeschwindigkeit der Hauptleistungsquelle basiert, die vom kombinierten Drehgeschwindigkeits- und Drehmomentsensor (111) erfaßt wird, um die Hilfsleistungsquelle zu steuern, wodurch das proportionale zusätzliche Antreiben zwischen den zwei über den Planeten- oder Differentialradzug erreicht wird.

11. Vorrichtung nach jedem Anspruch 1 bis 4, wobei sie ferner mit den folgenden peripheren Betriebsvorrichtungen eingebaut werden kann, um den Bereich der Anwendungen zu erweitern:
• Eine Kupplung (122) mit einer Drehrichtung kann in Reihe zwischen der Hauptleistungsquelle (105) und der Drehausgangsschnittstelle (126) für die Begrenzung der unidirektionalen Drehmomentübertragung eingebaut werden, wobei, wenn das System ein offenes ist, dann die Kupplung (122) mit einer Drehrichtung weggelassen werden kann;
• Eine Kupplung (123) mit einer Drehrichtung kann ferner zwischen der rotierenden Welle (105) der Hauptleistungsquelle und dem Gehäuse (121) eingebaut werden, wobei die Hauptleistungsquelle im Stillstand ist, während die Hilfsleistungsquelle die Last gemäß der eingestellten Drehrichtung antreibt, wobei, wenn das System ein offenes ist, die Kupplung (122) mit einer Drehrichtung weggelassen werden;
• Die Kupplung (122) mit einer Drehrichtung, die manuell betätigt oder durch mechanische, fluide oder elektromagnetische Leistung gesteuert werden kann, wird ferner zwischen der Hauptleistungsquelle (105) und dem Gehäuse (121) eingebaut, um die Kupplung (122) mit einer Drehrichtung zu ersetzen, wodurch, wenn die Kupplung gelöst ist, das Antreiben mit zusätzlicher Geschwindigkeit oder Drehmomentzugabe zwischen der Hauptleistungsquelle und der Hilfsleistungsquelle gemäß dem entsprechenden Verhältnis durchgeführt wird oder eine Funktion der Gegendrehmomentdämpfung durch die Hilfsleistungsquelle für die Hauptleistungsquelle erzeugt wird; daher ist die Hauptleistungsquelle verriegelt, wenn die Kupplung gesperrt ist, während die Last (106) positiv oder gegenläufig durch die Hilfsleistungsquelle angetrieben wird oder die kinetische Energie der Trägheit der Last (106) für die Leistungsregeneration zurückgewonnen wird, wobei, wenn das System ein offenes ist, die oben erwähnte Kupplung (122) mit einer Drehrichtung oder die regelbare Kupplung (123) beide weggelassen werden können, oder die regelbare Kupplung weggelassen werden kann;
• Wenn die Hilfsleistungsquelle eine doppeltwirkende rotierende elektrische Maschine (102A) ist, kann die regelbare Kupplung (123), die manuelle betätigt oder durch mechanische, fluide oder elektromagnetische Leistung gesteuert werden kann, dazwischen eingebaut werden, wodurch, wenn die regelbare Kupplung (123) gesperrt ist, die doppeltwirkende Konstruktion verriegelt wird, damit die Hauptleistungsquelle die Last (106) direkt antreiben kann, wobei, wenn ein System ein offenes ist, die regelbare Kupplung (123) weggelassen werden kann;
• Wenn die elektrische Maschine der Hilfsleistungsquelle (102B) oder (102C) ist, dann kann am Rotor (134) der elektrischen Maschine neben der direkten Kupplung mit der Hauptleistungsquelle (101) und der direkten Verbindung mit der Abtriebswelle der Drehausgangsschnittstelle (126) oder der indirekten Kupplung über Transmissionskomponenten ferner eine Kupplung (122) mit einer Drehrichtung eingebaut werden, um die Wechselwirkungsanforderung zwischen den drei zu erfüllen, wobei der Einbauort der Kupplung (122) mit einer Drehrichtung und ihre Richtcharakteristik der Übertragung der kinetischen Energie umfassen: wenn die Hauptleistungsquelle mit der Drehausgangsschnittstelle (126) direkt oder über die Transmissionskomponenten verbunden wird, dann wird die Kupplung (122) mit einer Drehrichtung zwischen dem Rotor (134) der elektrischen Maschine der Hilfsleistungsquelle und einem rotierenden Bauteil zwischen der oben erwähnten Hauptleistungsquelle und der Drehausgangsschnittstelle (126) eingebaut, wobei die Kupplungsarbeitsdrehrichtung der Kupplung (122) mit einer Drehrichtung gemäß der Systemanforderung ausgewählt werden kann, und wenn der Rotor (134) der elektrischen Maschine der Hilfsleistungsquelle direkt oder über die Transmissionskomponenten mit der Drehausgangsschnittstelle (126) zu verbinden ist, dann kann die Kupplung (122) mit einer Drehrichtung zwischen der Hauptleistungsquelle (101) und jedem rotierenden Bauteil zwischen der oben erwähnten Hilfsleistungsquelle (102B) oder (102C) und der Drehausgabeschnittstelle (126) eingebaut werden, wobei die Kupplungsarbeitsdrehrichtung der Kupplung (122) mit einer Drehrichtung gemäß den Systemanforderungen ausgewählt werden kann, wobei, wenn das System ein offenes ist, die Kupplung (122) mit einer Drehrichtung weggelassen werden kann;
• Wenn die elektrische Maschine (102D) der Hilfsleistungsquelle mit der Hauptleistungsquelle über den Planeten- oder Differentialradzug gekoppelt wird, dann kann ferner eine Bremse (124) auf der rotierenden Welle der elektrischen Maschine (102D) der Hilfsleistungsquelle eingebaut werden, um so die Hilfsleistungsquelle und ihre Transmissionskomponenten zu sperren, während erlaubt wird, daß die Hauptleistungsquelle die Drehausgabeschnittstelle (126) direkt antreiben kann, oder für den Fall der Rückgewinnung der kinetischen Energie, um die Hauptleistungsquelle (101) zu sperren, während erlaubt wird, daß die elektrische Maschine (102D) der Hauptleistungsquelle durch die Trägheit der Last (106) angetrieben wird, um die Leistungsregeneration durchzuführen und die Bremsdämpfung zu erzeugen, wobei, wenn das System ein offenes ist, dann die Bremse (124) weggelassen werden kann.

12. Vorrichtung nach jedem Anspruch 1 bis 4, wobei die Kupplungen und die Steuerungsvorrichtungen ausgewählt werden können, um einen Teil oder alle der folgenden Funktionen zu umfassen:
• Durch Bezugnahme auf die Drehgeschwindigkeit der aktiven Leistungsquelle und die Drehmomentdifferenz mit der Abtriebswelle (100) als Basis wird die Hilfsleistungsquelle für das zusätzliche Antreiben gesteuert;
• Durch Bezugnahme auf die Drehgeschwindigkeit der Hauptleistungsquelle und die Drehmomentdifferenz mit der Abtriebswelle (100) als Basis wird die Hilfsleistungsquelle betrieben, um ein Gegendrehmoment zu erzeugen, das der Hauptleistungsquelle für das Bereitstellen der Dämpfung entspricht, sowie auf der Grundlage der oben erwähnten Funktionen oder eines Teils davon, um ferner die zusätzlichen Funktionen oder einen Teil davon, einschließlich der Steuerung der Hilfsleistungsquelle für das positive oder gegenläufige richtungsabhängige unabhängig Antreiben oder die Leistungsregeneration oder die Rückgewinnung der kinetischen Energie, bereitzustellen.

## Revendications

1. Ensemble moteur hybride combiné comprenant :
• une source de puissance primaire (101) possédant un arbre rotatif (105) pour entraîner un arbre de sortie (100) par l'intermédiaire d'un dispositif (111) ;
• une source de puissance auxiliaire (102) pour entraîner ou pour freiner l'arbre de sortie (100) ;
• un moyen (114) pour commander la source de puissance auxiliaire (102) ;
**caractérisé en ce que** le dispositif (111) comprend un détecteur de vitesse de rotation et de différentiel de couple de rotation pour détecter la vitesse de rotation de l'arbre de sortie (100) et pour détecter le différentiel de couple de rotation entre l'arbre rotatif (105) et l'arbre de sortie (100) ; et **en ce que** le moyen de commande (114) utilise le signal de vitesse de rotation de l'arbre de sortie (100) et le différentiel de couple de rotation entre l'arbre rotatif (105) et l'arbre de sortie (100) comme base de référence de la commande.

2. Ensemble moteur hybride selon la revendication 1, **caractérisé en ce que** l'interaction entre la source de puissance primaire (101), la source de puissance auxiliaire (102) et l'arbre de sortie (100) comporte tout ou partie des fonctions suivantes :
• en prenant comme référence de base le signal de vitesse de rotation de l'arbre de sortie (100) et le différentiel de couple de rotation, la source de puissance auxiliaire (102) fournit un entraînement auxiliaire proportionnel correspondant pour entraîner classiquement la charge avec la source de puissance primaire (101) ;
• la source de puissance primaire (101) entraîne la charge de façon indépendante ;
• la source de puissance auxiliaire (102) entraîne la charge de façon indépendante ;
• en prenant comme référence en tant que base, le signal de vitesse de rotation de l'arbre de sortie (100) et le différentiel de couple de rotation, la source de puissance auxiliaire (102) produit un effet de régénération de puissance ou le contre-entraînement pour générer une puissance inverse de freinage correspondante afin de limiter l'arbre de sortie (100) et la charge ;
• en prenant comme référence en tant que base, le signal de vitesse de rotation de l'arbre de sortie (100) et le différentiel de couple de rotation, la source de puissance auxiliaire (102) produit un effet de régénération de puissance ou le contre-entraînement pour générer un amortissement inverse au moyen de l'énergie cinétique inverse correspondante ;
• l'arbre de sortie (100) est verrouillé en mouvement pour posséder la fonction du produit n°5 indépendamment.

3. Ensemble moteur hybride selon la revendication 1 à 2, selon lequel on utilise le signal de vitesse de rotation de l'arbre de sortie (100) et le différentiel détecté de couple de rotation comme référence pour commander la source de puissance auxiliaire (102) et fournir un entraînement auxiliaire supplémentaire dans la même direction selon le rapport d'entraînement auxiliaire correspondant préréglé, dans lequel l'entraînement auxiliaire comprend :
1) un entraînement auxiliaire unidirectionnel ou bidirectionnel, dont le rapport d'entraînement auxiliaire entre la source de puissance primaire (101) et la source de puissance auxiliaire (102) peut être établi en utilisant la vitesse de rotation de l'arbre de sortie (100) et le différentiel détecté de couple de rotation pour effectuer l'entraînement auxiliaire à rapport pré réglé ou pour effectuer la commande aléatoire par le dispositif à fonctionnement manuel ;
2) un état d'amortissement inverse de l'inertie de sortie, selon lequel la source de puissance auxiliaire (102) est commandée par un dispositif à fonctionnement manuel ou par la vitesse de rotation de l'arbre de sortie (100) et le différentiel détecté de couple de rotation par lequel l'effet de régénération de la puissance ou du contre-entraînement engendre le couple inverse en tant qu'amortissement, ou
3) un amortissement dû à la charge de la source de puissance primaire (101), dans lequel la source de puissance auxiliaire (102) est commandée aléatoirement par un dispositif actionné manuellement ou est commandée en utilisant la vitesse de rotation de l'arbre de sortie (100) et le différentiel de couple de rotation comme base de commande, et est en outre commandée par l'effet de régénération de la puissance ou du contre-entraînement pour générer l'amortissement dû à la charge.

4. Ensemble moteur selon l'une quelconque des revendications 1 à 3, dans lequel son mode de réalisation de base comprend les éléments suivants :
• une source de puissance primaire (101) qui est un dispositif de puissance entraîné manuellement ou par énergie électrique ou une autre énergie mécanique et est prévue pour effectuer des mouvements de rotation, dont l'arbre rotatif (105) est directement couplé ou couplé en puissance avec une source de puissance auxiliaire (102) ou une charge (106) à travers des dispositifs unidirectionnels avec la source de puissance auxiliaire de la charge ;
• un dispositif (111) détecteur de vitesse de rotation de couple de rotation du type à co-génération (111) qui est un dispositif détecteur de vitesse de rotation analogique ou numérique qui peut être utilisé comme base de commande pour détecter la vitesse et le sens de rotation de l'arbre de sortie (100) et le différentiel de couple de rotation entre l'arbre de sortie (100) et l'arbre rotatif (105), dont le signal de détection est généré par l'effet électromagnétique ou l'effet photoélectrique ou d'autres effets physiques, dans lequel le procédé de co-génération est compris comme ayant une seule structure détectée pour générer un signal à partir de la vitesse de rotation et de la différence de couple de rotation ou générant des signaux distincts à partir de deux structures individuelles détectées ;
• un dispositif détecteur de vitesse auxiliaire (112) qui est un dispositif détecteur de vitesse de rotation de type analogique ou numérique prévu pour détecter la vitesse de rotation de la source de puissance auxiliaire ou de l'arbre de sortie et pour entrer un tel signal dans le moyen de commande central (114) afin de fournir la limitation de vitesse ou un autre retour de signal de commande de vitesse de sortie, lequel peut être omis pour un système de type ouvert ;
• la structure mécanique qui génère la translation activée relative due au différentiel de couple de rotation entre l'arbre rotatif (105) de ladite source de puissance primaire (101) précédente et l'arbre de sortie (100) tout en maintenant l'état de transmission entre eux, lequel comprend des mécanismes de translation bidirectionnelle radiale ou axiale communément utilisés, comprend l'actionneur bidirectionnel à vis ou l'actionneur bidirectionnel à vis interne ou externe, ou mécanisme de couplage à surface conique ou à engrenage conique axial à mise en action bidirectionnelle, ou la structure de détecteur qui peut convertir la translation bidirectionnelle ou la translation angulaire de rotation en puissance électrique, de courant alternatif ou de courant continu, à balais ou sans balais, ou structure de type induite constituée par l'effet photoélectrique analogique ou numérique, l'effet électromagnétique ou d'autres effets physiques, en ce qu'un signal de puissance relative proportionnel linéairement ou non-linéairement, positive ou inverse, est généré par le mouvement rotatif, et le rapport de signal de puissance est modifié par la position de couplage relatif axial en variation proportionnelle linéaire ou non-linéaire, positive ou inverse ;
• un arbre de sortie (100) prévu entre le côté sortie et le dispositif détecteur de vitesse de rotation et de couple de rotation (111) pour transmettre l'énergie cinétique de rotation ;
• un dispositif à fonctionnement manuel (113) qui est un dispositif de commande d'entrée comprenant des composants électroniques, électromécaniques ou monolithiques ainsi que les interfaces de mécanisme de commande associées, dans lequel il peut être actionné de manière manuelle pour produire un signal de puissance électrique numérique ou analogique ou pour recevoir des entrées provenant d'autres interfaces de signal de puissance électrique pour transmettre au contrôleur central (114), et pour commander en outre la puissance de fonctionnement de la source de puissance auxiliaire de manière à produire un entraînement auxiliaire proportionnel ou un amortissement inverse proportionnel ;
• un moyen de commande (114) qui est un dispositif à circuit électrique analogique ou numérique comprenant des composants électroniques électromécaniques ou monolithiques, ou des microprocesseurs, lequel dépend du dispositif détecteur de vitesse de rotation et de couple de rotation (111) de type co-génération entraîné par la source de puissance primaire (101) et les commandes aléatoires du dispositif à fonctionnement manuel (113) pour commander le dispositif d'entraînement électrique (115) et pour en outre entraîner la source de puissance auxiliaire (102) pour l'opération en fonctionnement moteur ou pour l'opération de fonctionnement en rétablissement de puissance ; dans lequel l'opération entre la source de puissance primaire (101), la source de puissance auxiliaire (102) et l'arbre de sortie (100) peut consister soit en des fonctions d'entraînement auxiliaire proportionnel linéaire ou non-linéaire, soit en des fonctions d'amortissement proportionnel telles que requises, et le système peut être en configurations de type à anneau fermé, à anneau ouvert ou à anneau semi-fermé ;
• un dispositif d'entraînement de machine électrique (115) qui comprend un dispositif électronique électromécanique ou monolithique, actionné par le moyen de commande (114) ou par le dispositif à fonctionnement manuel (113) pour commander la puissance d'entrée/sortie et les sens de rotation de la source de puissance auxiliaire (102) ;
• une source de puissance auxiliaire (102) qui est une machine électrique rotative motrice et en outre a des fonctions de générateur, dont les types de mode de réalisation comportent une machine électrique rotative à double action (102A) ou des machines électriques à combinaison tournante et statique (102C, 102C ou 102D), dans laquelle les procédés de couplage des différents types de mode de réalisation avec la source de puissance primaire (101) présentent des fonctions d'opération différentes ;
• une source de puissance (116) qui fournit la puissance nécessaire à la source de puissance auxiliaire, au contrôleur central, au dispositif d'entraînement de machine électrique, au dispositif de fonctionnement d'entrée et aux dispositifs de commande périphériques ou à la source de régénération de réserve supplémentaire à partir de la source de puissance auxiliaire ;
• une charge (106) constituée par le mécanisme à translation rotationnelle ou linéaire acceptant l'entrée de puissance rotationnelle.

5. Ensemble moteur hybride selon l'une quelconque des revendications 1 à 4, lequel comprend les éléments suivants :
• un arbre rotatif de source de puissance primaire (105) entraîné par l'énergie cinétique de la source de puissance primaire (101), dans lequel une structure interactive à vis (201) est prévue entre l'arbre rotatif de source de puissance primaire (105) et l'orifice d'arbre du rotor de translation axiale (211) du dispositif détecteur de vitesse de rotation et de couple de rotation de type à co-génération, dont la structure interactive à vis (201) comprend une vis à filet denté ou à filetage lisse, dans lequel l'angle de vis peut être interactif bi-directionnel, c'est-à-dire que l'arbre rotatif de source de puissance primaire (105) peut être tourné pour faire translater axialement le rotor de translation axiale (211), ou le rotor de translation axiale (211) mis sous pression peut inverser l'entraînement de l'arbre rotatif de la source de puissance primaire (105) pour tourner, ou le rotor de translation (211) peut tourner par lui-même ; un arbre de renvoi secondaire pour la transmission axiale en translation ou en rotation ou un autre mécanisme à clavette de verrouillage (215) pour la transmission par glissement axial ou par rotation est prévu entre le rotor de translation axiale (211) et l'arbre de sortie (100) pour entraîner le côté sortie, permettant ainsi la translation axiale relative au cours de la transmission rotationnelle entre eux tout en maintenant la fonction de transmission ;
• un ressort pré-comprimé (202) est prévu entre l'arbre rotatif de source de puissance primaire (105) et la source de puissance primaire (101), par lequel le rotor de translation axiale (211) est pré-comprimé, par lequel la translation axiale relative est produite dans la direction et l'intensité du couple de transmission au cours de la transmission de puissance rotative entre l'arbre rotatif de source de puissance primaire (105) et le rotor de translation axiale (211), dans lequel, le rotor de translation axiale (211) est couplé de manière correspondante à la structure statique montée sur le carter (121), par lequel le signal de puissance électrique du détecteur est produit au cours de l'interaction de rotation, dont l'intensité du signal de détection de la puissance électrique est déterminée par la vitesse de rotation relative et les positions de couplage axial entre le rotor de translation axiale (211) et la structure statique, dont la vitesse de rotation est déterminée par la vitesse de rotation absolue entre la source de puissance primaire (101) et le carter (121), et les positions relatives axiales sont déterminées par le différentiel de couple de rotation entre la source de puissance primaire (101) et l'arbre de sortie (100), par lequel la translation axiale de rotation produite par le rotor de translation axiale (211) et le ressort pré-comprimé (202) change en outre la fonction de couplage axiale entre le rotor de translation axiale (211) et la structure statique.
• le dispositif détecteur de vitesse de rotation et de différentiel de couple de rotation de type à co-génération (111) constitué par ledit précédent rotor de translation axiale (211) et la structure statique, dans lequel la structure statique peut comporter le noyau de fer conducteur magnétique (213) et la bobine de détecteur de puissance électrique (212), et le rotor de translation axiale (211) peut comporter une structure ayant un pôle magnétique (216) et un orifice d'arbre avec une vis d'interaction, dont la structure entre la structure statique et le rotor de translation axiale peut être constituée par une structure cylindrique ou en tronc de cône ;
• pour le dispositif détecteur de vitesse de rotation et de différentiel de couple de rotation de type à co-génération (111) constitué par ledit précédent rotor de translation axiale (211) et la structure statique, dans lequel lorsque la vitesse de rotation est nulle, son signal de sortie peut être soit nul, ou alors être réglé supérieur ou inférieur à zéro ;
• pour le dispositif détecteur de vitesse de rotation et de différentiel de couple de rotation de type à co-génération (111) constitué par ledit précédent rotor de translation axiale (211) et la structure statique, lorsque la vitesse de rotation est nulle, son signal de sortie peut être soit nul, ou alors être réglé supérieur ou inférieur à zéro ;
• le signal détecté par le dispositif détecteur de vitesse de rotation et de différentiel de couple de rotation de type à co-génération (111) peut être un signal analogique ou numérique, dans lequel le signal analogique peut passer par le circuit amplificateur opérationnel analogique pour la comparaison du signal ou la synthèse de signal, par lequel il peut être traité par le contrôleur central (114) pour commander de manière supplémentaire le dispositif d'entraînement de machine électrique (115) pour fournir un entraînement de puissance relative provenant de la source de puissance auxiliaire (102) et pour limiter sa puissance la plus élevée, dans lequel, pour le cas du signal numérique, le signal est traité par le contrôleur central (114) pour commander en outre le dispositif d'entraînement de machine électrique (115) pour fournir une commande relative sur la source de puissance auxiliaire (102) et pour limiter sa puissance la plus élevée ;
• la structure mécanique qui génère l'actionnement de la translation relative due au différentiel de couple de rotation de l'arbre rotatif (105) de ladite précédente source de puissance primaire (101) et de l'arbre de sortie (100) tout en maintenant l'état de transmission entre eux, en ce qu'elle comprend les mécanismes de translation bidirectionnelle axiale ou radiale communément utilisés, comprenant la structure de vis à mise en action bidirectionnelle ou la structure de vis sans tête de type interne ou externe à mise en action bidirectionnelle, ou mécanisme de couplage à surface conique ou à engrenage conique axial à mise en action bidirectionnelle, ou la structure de détecteur qui peut convertir la translation bidirectionnelle ou la translation angulaire rotationnelle en puissance électrique, lequel comprenant la structure à courant alternatif ou à courant continu, à balais ou sans balais, ou de type induite constituée par l'effet photoélectrique analogique ou numérique, l'effet électromagnétique ou d'autres effets physiques, par lequel, un signal de puissance relative de variation proportionnelle linéaire ou non-linéaire, positive ou inverse, est généré par le mouvement de rotation relatif, et le rapport de signal de puissance est modifié en raison de la position du couplage relatif axial en variation proportionnelle linéaire ou non-linéaire, positive ou inverse ;
• un arbre de sortie (100) entraîné par l'énergie cinétique de rotation de la source de puissance primaire (101) à travers le rotor de translation axiale (211), et est entraîné par l'énergie cinétique de rotation de la source de puissance secondaire (102), dans lequel, les méthodes d'entraînement en rotation faisant intervenir la source de puissance secondaire (102) comprennent le mécanisme d'entraînement indirect au moyen d'éléments de transmission pour se coupler avec la source de puissance secondaire (102), ou le couplage direct entre l'arbre de sortie (100) et le rotor de la source de puissance secondaire (102), dans lequel les méthodes de couplage de celui-ci avec la charge comprennent le couplage direct avec la charge, ou au moyen de dispositifs de transmission tels qu'un engrenage, une roue dentée et des liaisons pour entraîner la charge.

6. Ensemble moteur hybride selon l'une quelconque des revendications 1 à 4, dans lequel la structure principale est **caractérisée en ce qu'**elle comprend un rotor de translation axiale (311) et la structure statique pour détecter le différentiel de couple de rotation entre l'arbre rotatif de source de puissance active (105) et l'arbre de sortie (100) pour exercer une translation axiale et pour en outre générer un signal de puissance, et **caractérisé par** un autre dispositif détecteur de vitesse de rotation d'entraînement (300) monté entre l'arbre rotatif de source de puissance active (105) et le carter (121), dans lequel le dispositif détecteur de couple de rotation et de vitesse de rotation de type à co-génération (111) est communément constitué par les deux dispositifs susmentionnés, et comprend principalement les éléments suivants :
• un arbre rotatif de source de puissance primaire (105) entraîné par l'énergie cinétique de la source de puissance primaire (101), dans lequel une structure interactive à vis (201) est prévue entre l'arbre rotatif de source de puissance primaire (105) et l'orifice d'arbre du rotor de translation axiale (311) du dispositif détecteur de vitesse de rotation et de couple de rotation de type à co-génération, dont la structure interactive à vis (201) se compose d'une vis à filet denté ou à filetage lisse, dans lequel l'angle de vis peut être interactif bi-directionnel, c'est-à-dire que l'arbre rotatif de la source de puissance primaire (105) peut être tourné pour faire translater le rotor de translation de manière axiale (311), ou le rotor de translation axiale (311) sous pression peut inverser l'entraînement de l'arbre rotatif de la source de puissance primaire (105) pour tourner, ou le rotor de translation axiale (211) peut tourner par lui-même ; un arbre de renvoi secondaire pour la transmission axiale en translation ou en rotation ou un autre mécanisme à clavette de verrouillage (215) pour la transmission par glissement axial ou par rotation est prévu entre le rotor pouvant translater de manière axiale (311) et l'arbre de sortie (100) pour entraîner le côté sortie, permettant ainsi la translation axiale relative au cours de la transmission de rotation entre eux tout en maintenant la fonction de transmission ;
• un ressort pré-comprimé (202) est prévu entre l'arbre rotatif de la source de puissance primaire (105) et la source de puissance primaire (101), par lequel le rotor de translation axiale (311) est pré-comprimé, par lequel la translation axiale relative est produite selon la direction et l'intensité du couple de transmission au cours de la transmission de puissance de rotation entre l'arbre rotatif de source de puissance primaire (105) et le rotor de translation axiale (311) est couplé de manière correspondante à la structure statique montée sur le carter (121), par lequel le signal de puissance électrique du détecteur est généré au cours de l'interaction de rotation, dont l'intensité du signal de détection de la puissance électrique est déterminée par la vitesse de rotation relative et les positions de couplage axial entre le rotor de translation axiale (311) et la structure statique, dans lequel la position relative axiale est déterminée par le différentiel de couple de rotation entre la source de puissance primaire (101) et l'arbre de sortie (100), par lequel la translation de rotation axiale produite par le rotor de translation axiale (311) et le ressort pré-comprimé (202) change en outre la fonction de couplage axiale entre le rotor de translation axiale (311) et la structure statique, et le dispositif détecteur de vitesse d'entraînement (300) est prévu entre la source de puissance primaire (101) et le carter (121) pour détecter la vitesse de rotation absolue entre eux ;
• le dispositif détecteur de vitesse de rotation et de différence de couple de rotation de type à co-génération (111) constitué par ledit précédent rotor de translation axiale (311) et la structure statique, dans lequel la structure statique peut comporter le noyau de fer conducteur magnétique (313), la bobine primaire (310) comme source de signal d'entrée de courant alternatif, et la bobine secondaire (312) pour fournir le signal de puissance de détection de translation et le rotor de translation axiale (311) peut comporter une structure ayant un noyau de fer conducteur magnétique (313), et un orifice d'arbre avec une vis d'interaction ;
• pour le dispositif détecteur de vitesse de rotation et de différentiel de couple de rotation de type à co-génération (111) constitué par ledit précédent rotor de translation axiale (211) et la structure statique, dans lequel lorsque le couple de rotation est nul, son signal de sortie peut être soit nul, soit être réglé à une valeur supérieure ou inférieure à zéro ;
• pour le dispositif détecteur de vitesse de rotation et de différentiel de couple de rotation de type à co-génération (111) constitué par ledit précédent rotor de translation axiale (311) et la structure statique, quelle que soit la position relative du rotor de translation axiale, lorsque la vitesse de rotation est nulle, son signal de sortie peut être soit nul, soit fixé supérieur ou inférieur à zéro ;
• le signal de sortie peut être nul lorsque la vitesse de rotation du dispositif détecteur de vitesse de rotation d'entraînement susmentionné (300) est nulle ;
• le signal de différence de couple susmentionné et le signal de vitesse de rotation absolue peuvent être soit un signal analogique, soit un signal numérique, dans lequel le signal analogique peut être synthétisé par le circuit amplificateur opérationnel analogique, par lequel il peut être traité par le contrôleur central (114) pour commander en outre le dispositif d'entraînement de machine électrique (115) afin de fournir un entraînement de puissance relative provenant de la source de puissance auxiliaire (102) lequel pour limiter sa puissance la plus élevée, dans lequel dans le cas du signal numérique, le signal est traité par le contrôleur central (114) pour commander de manière supplémentaire le dispositif d'entraînement de machine électrique (115) afin de fournir une commande relative sur la source de puissance auxiliaire (102) et limiter ainsi sa puissance la plus élevée ;
• la structure mécanique qui génère l'action de translation relative due au différentiel de couple de rotation de l'arbre rotatif (105) de ladite précédente source de puissance primaire (101) et l'arbre de sortie (100) tout en maintenant l'état de transmission entre eux, comprenant les mécanismes de translation bidirectionnelle axiale ou radiale communément utilisés, comprenant la structure de vis à mise en action bidirectionnelle ou la structure de vis sans tête de type vis interne ou vis externe à mise en action bidirectionnelle, ou mécanisme de couplage à surface conique ou à engrenage conique axial à mise en action bidirectionnelle, ou la structure de détecteur qui peut convertir la translation bidirectionnelle ou la translation angulaire rotationnelle en puissance électrique, lequel comprend la structure à courant alternatif ou à courant continu, à balais ou sans balais, ou de type induite constituée par l'effet photoélectrique analogique ou numérique, l'effet électromagnétique ou d'autres effets physiques, par lequel un signal de puissance relative de proportion linéaire ou non-linéaire, positive ou de proportion inverse, est généré par le mouvement rotatif relatif, et le rapport de signal de puissance est changé en raison de la position de couplage relatif axial en variation proportionnelle linéaire ou non-linéaire, positive ou inverse ;
• un arbre de sortie (100) entraîné par l'énergie cinétique de rotation de la source de puissance primaire (101) au moyen du rotor de translation axiale (311), et est entraîné par l'énergie cinétique de rotation de la source de puissance secondaire (102), dans lequel les méthodes de rotation utilisant la source de puissance secondaire (102) comprennent le mécanisme d'entraînement indirect au moyen d'éléments de transmission se couplant à la source de puissance secondaire (102), ou le couplage direct entre l'arbre de sortie (100) et le rotor de la source de puissance secondaire (102), par lequel les méthodes de couplage de celui-ci à la charge comprennent le couplage direct avec la charge, ou au moyen de dispositifs de transmission tels qu'un engrenage, une roue dentée et des liaisons pour entraîner la charge.

7. Ensemble moteur hybride selon l'une quelconque des revendications 1 à 4, dans lequel la source de puissance auxiliaire est une machine électrique rotative à double action (102A) qui comprend le premier rotor interactif (103) et le second rotor interactif (104), lesquels sont entraînés mutuellement et sont constitués par le champ magnétique et les rotors, dont la structure peut être de forme cylindrique, en coupelle, en disque ou en cône, et leur structure de machine électrique et ses modes de réalisation de fonctionnement comprennent : des types de mode de réalisation de machine électrique rotative à courant alternatif ou à courant continu, synchrone ou asynchrone, à balais ou sans balais, lequel est **caractérisé en ce que** le premier rotor interactif (103) est couplé avec le dispositif détecteur de vitesse de rotation et de couple de rotation de type à co-génération (111) par l'intermédiaire de l'arbre de sortie (100), et est en outre couplé à l'arbre rotatif de source de puissance primaire (105), tandis que le second rotor interactif (104) est monté directement ou par l'intermédiaire d'éléments de transmission pour entraîner l'interface de sortie de rotation (126) ; dans lequel un embrayage unidirectionnel (122) peut être monté entre l'arbre rotatif de source de puissance primaire (105) et le carter (121) tel que requis pour sélectionner un des sens afin d'empêcher l'entraînement inverse, et l'embrayage unidirectionnel peut être omis si sa fonction est supprimée, dans lequel pour les types de modes de réalisation susmentionnés du premier rotor interactif (103) et le second rotor interactif (104), l'un d'entre eux est dans une structure de champ de machine électrique et l'autre est dans une structure de rotor de machine électrique, dans lequel les deux ou un seul d'entre eux, peut en outre être prévu équipé d'un anneau de conduction auxiliaire (107), d'un balais conducteur (117) et d'un logement pour balais pour s'adapter aux types de mode de réalisation à double action et pour transmettre la puissance au cours de l'entraînement à double action, dans lequel sa structure et ses caractéristiques fonctionnelles peuvent être choisies pour comprendre simultanément une ou plusieurs des fonctions suivantes:
1) la fonction d'entraînement auxiliaire en supplément de vitesse en contrôlant le rapport de vitesse : le premier rotor interactif (103) par l'intermédiaire de l'arbre de sortie (100) est couplé au dispositif détecteur de vitesse de rotation et de différentiel de couple de rotation de type à co-génération (111) et est en outre couplé à la source de puissance primaire (101), tandis que le second rotor interactif (104) est raccordé à l'interface de sortie de rotation (126) ;
2) une fonction d'amortissement inverse correspondant à la source de puissance primaire : le second rotor interactif (104) est à l'arrêt, tandis que le premier rotor interactif (103) fournit un couple de rotation inverse contraire au sens de fonctionnement de la source de puissance primaire (101), dans lequel le couple de rotation inverse peut être inférieur au couple de rotation de la source de puissance primaire (101) et dans le sens inverse de la source de puissance primaire ;
3) la récupération d'énergie cinétique de l'inertie de la charge (106) ou la fourniture de la fonction d'amortissement vers la puissance transférée en retour de la charge (106) : le premier rotor interactif (103) est à l'arrêt, et le second rotor interactif (104) fournit la fonction de régénération et pour en outre générer un amortissement.

8. Ensemble moteur hybride selon l'une quelconque des revendications 1 à 4, dans lequel il est constitué par la source de puissance primaire et la source de puissance auxiliaire montées sur l'arbre commun, dont le carter statique (133) de la source de puissance auxiliaire (102B) est fixe, tandis que le rotor (134) entraîne la charge (106), dans lequel, le type de mode de réalisation de la machine électrique comprend des machines électriques à courant alternatif ou à courant continu, synchrones ou asynchrones, à balais ou sans balais, dans lequel son mode de réalisation et ses caractéristiques structurelles peuvent être choisis pour comprendre simultanément une ou plusieurs des fonctions suivantes:
1) la source de puissance primaire (105) par l'intermédiaire de l'embrayage unidirectionnel (122) et l'interface de sortie de rotation (126) de la machine électrique (102B) apparaît dans une structure coaxiale pour entraîner la charge (106), dans laquelle si le système est de type ouvert, alors l'embrayage unidirectionnel (122) peut être omis ;
2) le dispositif détecteur de vitesse de rotation et de différence de couple de rotation de type à co-génération (111) est monté entre l'arbre rotatif de source de puissance primaire (105) ou sa structure rotative entraînée et la structure statique, par lequel il est employé pour détecter la vitesse de rotation de la source de puissance primaire (101) et sa différence de couple de rotation avec l'arbre de sortie (100) puis comme base de référence de commande de fonctionnement du système ;
3) le différentiel de couple de rotation entre la source de puissance primaire et l'arbre de sortie (100) détectée par le dispositif détecteur de vitesse de rotation et de différentiel de couple de rotation de type à co-génération est utilisé pour la fonction d'entraînement auxiliaire proportionnelle : la source de puissance primaire est mise en rotation pour entraîner le dispositif détecteur de vitesse de rotation et de différentiel de couple de rotation de type à co-génération (111), et pour en outre générer le signal correspondant chez le contrôleur central (114), tandis que lorsque le signal de vitesse de rotation atteint la valeur fixée par réglage, la machine électrique de source de puissance auxiliaire (102B) est entraînée par le dispositif d'entraînement de machine électrique (105) pour générer le couple d'entraînement auxiliaire dans le même sens que l'arbre rotatif de la source de puissance primaire, et le couple de rotation d'entraînement auxiliaire est commandé en fonction du rapport fixé par réglage du contrôleur central (114), ou le couple de rotation d'entraînement auxiliaire est déterminé par le dispositif à fonctionnement manuel (113), le contrôleur central (114) et le contrôle aléatoire du dispositif d'entraînement de machine électrique (115) sur la machine électrique de source de puissance auxiliaire (102B) ;
4) la vitesse de rotation de l'entraînement auxiliaire de la machine électrique de source de puissance auxiliaire (102B) et de l'entraînement synthétisé de la source de puissance primaire (101) vers la charge (106) est toujours inférieure à la vitesse de rotation de l'entraînement par la source de puissance primaire (101) ;
5) la fonction d'amortissement inverse correspondant à la vitesse de rotation de la source de puissance active (101) : c'est en se référant à la vitesse de rotation de la source de puissance primaire et au différentiel détecté de couple de rotation avec l'arbre de sortie (100) par le dispositif détecteur de vitesse de rotation et de différentiel de couple de rotation de type à co-génération (111) et en les utilisant comme base et en ce que la machine électrique de source de puissance auxiliaire (102B) est commandée par l'intermédiaire du contrôleur central (114) pour générer un amortissement inverse, dans lequel, le procédé de commande est le même que le procédé de fonctionnement susmentionné pour l'entraînement auxiliaire, sauf pour le sens de couple de rotation et la source de puissance primaire (101) qui sont contraires l'une de l'autre, dans lequel, le couple de rotation inverse est généré en fonction du rapport fixé par réglage du contrôleur central (114) ou par le dispositif à fonctionnement manuel (113) ou le contrôleur central (114) par l'intermédiaire du dispositif d'entraînement de machine électrique (115) pour commander de manière aléatoire la machine électrique de source de puissance auxiliaire (102B) pour ajuster la capacité du couple inverse ;
6) la valeur maximale de l'amortissement de couple inverse peut être commandé de la machine électrique de la source de puissance auxiliaire (102B) est toujours inférieure au couple d'entraînement de la source de puissance primaire (101) sur la machine électrique de la source de puissance auxiliaire (102B), ou lorsque le système est choisi pour un fonctionnement d'entraînement inverse, la source de puissance primaire (101) est entraînée de manière inverse par la machine électrique de source de puissance auxiliaire, et lorsque la source de puissance primaire (101) devient la charge entraînée inverse, le couple de rotation de la machine électrique de la source de puissance auxiliaire (102B) est toujours supérieur ou égal au couple de rotation de la source de puissance primaire (101) ;
7) fonction de récupération d'énergie cinétique : la machine électrique de la source de puissance auxiliaire (102B) est directement convertie pour réaliser une fonction de générateur, par laquelle elle fournit une sortie de génération de puissance pour un amortissement mécanique.

9. Ensemble moteur hybride selon l'une quelconque des revendications 1 à 4, lequel comprend les machines électriques et le train de roue planétaire ou différentiel, dont la source de puissance auxiliaire du système est constituée par la machine électrique (102C), dont le carter statique de machine électrique (133) est fixe, tandis que la charge est entraînée par le rotor (134), dans lequel, les types de machine électrique comprennent une machine électrique à courant alternatif ou à courant continu, synchrone ou asynchrone, à balais ou sans balais, dans lequel, ses caractéristiques fonctionnelles ou structurelles peuvent être choisies pour comprendre une ou plusieurs des fonctions suivantes simultanément :
1) l'arbre rotatif de source de puissance primaire (105) est monté coaxial à la machine électrique (102C), dans lequel par l'intermédiaire de l'embrayage unidirectionnel (122) il se trouve couplé au bras oscillant de sortie (118) entraîné par la roue planétaire (110) pour la connexion à l'interface de sortie de rotation (126), l'arbre rotatif du rotor (134) est entraîné par l'intermédiaire de la roue solaire (108) et de la roue annulaire externe (109) du carter du stator de la machine électrique (133) pour se coupler au train de roue différentiel de type planétaire pour la connexion à l'interface de sortie de rotation (126), dans lequel, si le système est de type ouvert, alors l'embrayage unidirectionnel (122) peut être omis ;
2) le dispositif détecteur de vitesse de rotation et de différence de couple de rotation de type à co-génération (111) est monté entre l'arbre rotatif de source de puissance primaire (105) ou sa structure rotative entraînée et la structure statique pour détecter la vitesse de rotation de la source de puissance primaire (101) et son différentiel de couple de rotation avec l'arbre de sortie (100) est utilisé comme base de référence de commande de fonctionnement du système ;
3) la fonction proportionnelle d'entraînement auxiliaire selon la vitesse de rotation de la source de puissance primaire : le dispositif détecteur de vitesse de rotation et de différentiel de couple de rotation de type à co-génération (111) est entraîné par la rotation de la source de puissance primaire (101) pour produire le signal correspondant et pour transmettre le signal au contrôleur central (114), lorsque le signal de rotation atteint une valeur fixée par réglage, la machine électrique de la source de puissance auxiliaire (102C) entraînée par le dispositif d'entraînement de machine électrique (115) avec la bascule (118) entraînée par la roue planétaire (110) du train de roue planétaire entraîné par l'arbre moteur rotatif de la source de puissance par l'intermédiaire du dispositif de transmission unidirectionnel (122) fournit un couple de rotation d'entraînement auxiliaire dans le même sens de rotation, par lequel le couple de rotation d'entraînement auxiliaire est commandé en fonction du rapport fixé du contrôleur central, ou est commandé par le dispositif à fonctionnement manuel (113) ou le contrôleur central (114) par l'intermédiaire du dispositif d'entraînement de machine électrique (115) pour commander de manière aléatoire la machine électrique de la source de puissance auxiliaire (102C) pour ajuster la capacité du couple de rotation d'entraînement auxiliaire, dans lequel si le système est de type ouvert, alors l'embrayage unidirectionnel (122) peut être omis ;
4) l'entraînement auxiliaire par la source de puissance auxiliaire (102C) et en ce que la vitesse de rotation d'entraînement synthétisée de la source de puissance primaire (101) vers la charge (106) est toujours inférieur à la vitesse de rotation d'entraînement par la source de puissance primaire (101) ;
5) la fonction d'amortissement inverse correspondant à la vitesse de rotation de la source de puissance active (101) : c'est en se référant à la vitesse de rotation de la source de puissance primaire et au différentiel détecté de couple de rotation avec l'arbre de sortie (100) par le dispositif détecteur de vitesse de rotation et de différentiel de couple de rotation de type à co-génération (111) utilisés comme base et en ce que la machine électrique de la source de puissance auxiliaire (102C) est commandée par l'intermédiaire du contrôleur central (114) pour générer un amortissement inverse, dont le procédé de commande est le même que le procédé de fonctionnement susmentionné pour l'entraînement auxiliaire, sauf pour le sens du couple de rotation et la source de puissance primaire (101) qui sont contraires l'un à l'autre, dans lequel le couple de rotation inverse est généré en fonction du rapport fixé par réglage du contrôleur central (114) ou par le dispositif à fonctionnement manuel (113) ou le contrôleur central (114) par l'intermédiaire du dispositif d'entraînement de la machine électrique (115) pour commander de manière aléatoire la capacité du couple inverse ;
6) la valeur maximale de l'amortissement de couple inverse pouvant être commandé de la machine électrique de source de puissance auxiliaire (102C) : lorsque le système est choisi pour un fonctionnement d'entraînement inverse, la source de puissance primaire (101) devient la charge entraînée inverse qui se trouve entraînée de manière inverse par la machine électrique de source de puissance auxiliaire (102C), le couple de rotation de la source de puissance auxiliaire (102C) étant toujours supérieur ou égal au couple de rotation de la source de puissance primaire (101) ;
7) fonction de récupération d'énergie cinétique : la machine électrique de source de puissance auxiliaire (102C) est directement convertie pour effectuer une fonction de générateur, par laquelle elle fournit une sortie de génération de puissance pour un amortissement mécanique.

10. Ensemble moteur hybride selon l'une quelconque des revendications 1 à 4, dans lequel la source de puissance auxiliaire est constituée par la machine électrique (102D), par laquelle il est couplé avec la source de puissance primaire par l'intermédiaire du train de roue planétaire (ou différentiel), dont les types de machines électriques comprennent une machine électrique à courant alternatif ou à courant continu, synchrone ou asynchrone, à balais ou sans balais, dans lequel ses caractéristiques structurelles ou fonctionnelles comprennent les fonctions suivantes :
• une fonction d'entraînement auxiliaire proportionnelle : la source de puissance primaire (101), la machine électrique de source de puissance auxiliaire (102D) et l'interface de sortie rotative (126) sont respectivement couplées à la roue solaire (108), la roue planétaire (110) et la roue annulaire externe (109) en fonction du rapport de vitesse relative et de la nécessité fonctionnelle, dans laquelle la relation entre la source de puissance primaire (101) et la source de puissance auxiliaire (102D) est basée sur la vitesse de rotation de la source de puissance primaire détectée par le dispositif détecteur de vitesse de rotation et de différence de couple de rotation de type à co-génération (111) pour commander la source de puissance auxiliaire, par lequel l'entraînement auxiliaire proportionnel entre les deux est réalisé par l'intermédiaire du train de roue planétaire ou différentiel ;

11. Ensemble moteur hybride selon l'une quelconque des revendications 1 à 4, dans lequel il peut en outre être prévu des dispositifs de fonctionnement périphériques pour étendre le domaine d'application :
• un embrayage unidirectionnel (122) peut être monté en série entre la source de puissance primaire (105) et l'interface de sortie rotationnelle (126) pour la limitation de la transmission de couple de rotation unidirectionnelle, dans lequel si le système est de type ouvert, alors l'embrayage unidirectionnel (122) peut être omis ;
• un embrayage unidirectionnel (122) peut en outre être monté entre l'arbre rotatif de la source de puissance primaire (105) et le carter (121), par lequel la source de puissance est à l'arrêt quand la source de puissance auxiliaire entraîne la charge en fonction du sens de rotation fixé par réglage, dans lequel si le système est de type ouvert, alors l'embrayage unidirectionnel (122) peut être omis ;
• l'embrayage commandable (123) qui peut être actionné manuellement, ou commandé par la puissance mécanique, hydraulique ou électromagnétique est en outre monté entre la source de puissance primaire (105) et le carter (121) pour remplacer l'embrayage unidirectionnel (122), par lequel lorsque l'embrayage est relâché, l'entraînement à supplément de vitesse auxiliaire ou couple de rotation est effectué entre la source de puissance primaire et la source de puissance auxiliaire en fonction du rapport correspondant, ou une fonction d'amortissement de couple de rotation inverse est générée par la source de puissance auxiliaire vers la source de puissance primaire ; dans lequel, lorsque l'embrayage est fermé, la source de puissance primaire est verrouillée, alors que la charge (106) est entraînée de manière positive ou inverse par la source de puissance auxiliaire, ou l'énergie cinétique de l'inertie de la charge (106) est récupérée pour la régénération de puissance, dans lequel si le système est de type ouvert, alors ledit précédent embrayage unidirectionnel (122) ou l'embrayage commandable (123) peuvent être omis tous les deux, ou seul l'embrayage commandable peut être omis ;
• lorsque la source de puissance auxiliaire est une machine électrique rotative à double action (102A), l'embrayage commandable (123) qui peut être actionné manuellement, ou commandable par la puissance mécanique, hydraulique ou électromagnétique peut être monté entre eux, dans lequel, lorsque l'embrayage contrôlable (123) est fermé, la structure à double action est inter-verrouillée pour permettre à la source de puissance primaire d'entraîner directement la charge (106), dans lequel, si le système est de type ouvert, alors l'embrayage contrôlable (123) peut être omis ;
• lorsque la machine électrique de source de puissance auxiliaire est (102B) ou (102C), alors le rotor de machine électrique (134) en plus du couplage direct avec la source de puissance primaire (101) et de la connexion directe avec l'arbre de sortie de l'interface de la sortie rotative (126) ou le couplage indirect par l'intermédiaire d'éléments de transmission, dans lequel un embrayage unidirectionnel (122) peut être en outre monté pour correspondre aux nécessités d'interaction entre les trois, dont la position de montage de l'embrayage unidirectionnel (122) et en ce que sa directivité de transmission d'énergie cinétique comprend : si la source de puissance primaire est raccordée à l'interface de sortie rotationnelle (126) directement ou par l'intermédiaire d'éléments de transmission, alors l'embrayage unidirectionnel (122) est monté entre le rotor de machine électrique (134) de la source de puissance auxiliaire et n'importe quel élément de rotation entre ladite précédente source de puissance primaire et l'interface de sortie rotative (126), dans lequel le sens de rotation de travail de l'embrayage unidirectionnel (122) peut être choisi en fonction des nécessités du système, lequel si le rotor de la machine électrique de la source de puissance auxiliaire (134) est raccordé directement ou par l'intermédiaire d'éléments de transmission pour raccorder l'interface de la sortie rotative (126), alors l'embrayage unidirectionnel (122) peut être monté entre la source de puissance primaire (101) et n'importe quel élément entre ladite précédente source de puissance auxiliaire (102B) ou (102C) et l'interface de sortie rotative (126), dans lequel le sens de rotation de travail de l'embrayage unidirectionnel (122) peut être choisi en fonction des nécessités du système, dans lequel, si le système est de type ouvert, alors l'embrayage unidirectionnel (122) peut être omis ;
• lorsque la machine électrique de source de puissance auxiliaire (102D) est couplée à la source de puissance primaire par l'intermédiaire du train de roue différentiel ou planétaire, alors un frein (124) peut en outre être monté sur l'arbre rotatif de la machine électrique de source de puissance auxiliaire (102D), afin de bloquer par celui-ci la source de puissance auxiliaire et ses éléments de transmission

12. Ensemble moteur hybride selon l'une quelconque des revendications 1 à 4, dans lequel les embrayages et les systèmes de commande peuvent être choisis pour comprendre tout ou partie des fonctions suivantes :
• en se référant à la vitesse de rotation de la source de puissance active et au différentiel de couple de rotation avec l'arbre de sortie (100) comme référence, la source de puissance auxiliaire est commandée pour l'entraînement auxiliaire ;
• en se référant à la vitesse de rotation de la source de puissance active et au différentiel de couple de rotation avec l'arbre de sortie (100) comme référence, la source de puissance auxiliaire est actionnée pour faire apparaître le couple de rotation inverse correspondant à la source de puissance primaire afin de fournir un amortissement, tout comme sur la base desdites fonctions précédentes ou partie d'entre elles pour fournir en outre les fonctions auxiliaires ou partie d'entre elles comprenant la commande de la source de puissance auxiliaire pour l'entraînement directionnel positif ou inverse, la régénération de puissance ou la récupération d'énergie cinétique.
